(19) Europäisches Patentamt
European Patent Office
Office européen des brevets

(11) EP 3 210 276 B1

(12) EUROPÄISCHE PATENTSCHRIFT

(45) Veröffentlichungstag und Bekanntmachung des Hinweises auf die Patenterteilung:
**22.01.2025 Patentblatt 2025/04**

(21) Anmeldenummer: **15781938.4**

(22) Anmeldetag: **20.10.2015**

(51) Internationale Patentklassifikation (IPC):
***H02J 3/28*** (2006.01) ***H02J 3/32*** (2006.01)
***H02J 7/34*** (2006.01) ***H02J 3/38*** (2006.01)

(52) Gemeinsame Patentklassifikation (CPC):
**H02J 7/34; H02J 3/28; H02J 3/32; H02J 3/381;**
H02J 3/388; H02J 2300/10; H02J 2300/28;
Y02B 70/3225; Y02E 10/76; Y04S 20/222

(86) Internationale Anmeldenummer:
**PCT/EP2015/074233**

(87) Internationale Veröffentlichungsnummer:
**WO 2016/062703 (28.04.2016 Gazette 2016/17)**

# (54) VERFAHREN ZUM BETREIBEN EINES INSELNETZES

METHODS FOR OPERATING A SEPARATE POWER SUPPLY SYSTEM

PROCÉDÉ POUR FAIRE FONCTIONNER UN RÉSEAU INDÉPENDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.10.2014 DE 102014221555**

(43) Veröffentlichungstag der Anmeldung:
**30.08.2017 Patentblatt 2017/35**

(73) Patentinhaber: **Wobben Properties GmbH**
**26607 Aurich (DE)**

(72) Erfinder:
- **ANDERLOHR, Jörg**
**26441 Jever (DE)**
- **BUSKER, Kai**
**26629 Großefehn (DE)**
- **LENZ, Bettina**
**26131 Oldenburg (DE)**
- **BEEKMANN, Alfred**
**26639 Wiesmoor (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
**WO-A1-2014/071459**
**US-A1- 2011 273 129**
**US-A1- 2012 313 593**
**US-A1- 2012 323 396**
**WO-A1-2014/071459**
**US-A1- 2011 273 129**
**US-A1- 2012 313 593**
**US-A1- 2012 323 396**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft ein Verfahren zum Betreiben eines elektrischen Netzes, insbesondere Inselnetzes, sowie das Betreiben wenigstens einer damit verbundenen Windenergieanlage als auch einer mit dem Netz verbundenen Ladestation. Die vorliegende Erfindung betrifft zudem ein solches Netz, eine entsprechende Ladestation und eine entsprechende Windenergieanlage sowie einen mit dem Netz verbundenen Windpark mit solchen Windenergieanlagen.

Unter einem elektrischen Inselnetz ist insoweit ein elektrisches Netz zu verstehen, das von einem großen Netz wie bspw. dem Europäischen Verbundnetz getrennt ist und autark arbeitet. Ein solches Inselnetz befindet sich üblicherweise tatsächlich auf Inseln oder Inselgruppen im geographischen Sinne. Es kann aber auch, besonders in einem abgelegenen Gebiet, ein isoliertes, autark arbeitendes Netz sein.

Das Betreiben von Inselnetzen ist bekannt und wird bspw. beschrieben in den beiden USamerikanischen Patentanmeldungen US 10/380,786 und US 10/506,944. Dort wird insbesondere beschrieben, für ein Inselnetz so viel Energie wie möglich aus Windenergieanlagen bereitzustellen. Liefern diese nicht ausreichend Energie, wird Energie aus Energiespeichern ergänzt und wenn auch das nicht ausreichend ist, kann ein Dieselgenerator zugeschaltet werden. Dokumente US 2011/273129 A1, WO 2014/071459 A1 und US 2012/323396 A1 offenbaren weitere Beispiele von dem Betreiben eines elektrischen Netzes, wobei ein Anstieggrenzgradient und/oder ein Verringerungsgrenzgradient bei der zeitlichen Änderung einer Einspeiseleistung berücksichtigt werden.

Nachteilig herbei kann sein, dass ein vornehmliches Aufbrauchen der Energie einer Batterie die Lebensdauer dieser Batterie verkürzt, mitunter signifikant verkürzt. Neben den Kosten die dann für den Austausch einer Batterie entstehen würden, ist es auch gerade bei Inselnetzen unerwünscht, unnötige Instandsetzungs- oder Reparaturmaßnahmen durchführen zu müssen. Das ist besonders dann ungünstig, wenn dadurch zweitweise der Betrieb des Inselnetzes gefährdet wird.

Auch ein streng bedarfsabhängiges Betreiben eines Dieselgenerators kann für diesen eine ungünstige Belastung darstellen, die auf Dauer auch seine Lebenserwartung oder Wartungszyklen verkürzen kann. Es kommt hinzu, dass Dieselgeneratoren häufig mit einer bestimmten Drehzahl nicht nur besonders verschleißarm sondern auch besonders sparsam arbeiten. Es ist also auch für den Dieselgenerator vorteilhaft, wenn seine Eigenschaften beim Betreiben eines Inselnetzes mit berücksichtigt werden.

Der vorliegenden Erfindung liegt somit die Aufgabe zugrunde, wenigstens eines der o.g. Probleme zu adressieren. Insbesondere soll eine Lösung vorgeschlagen werden, bei der die Batterie und der Dieselgenerator in dem Inselnetz so schonend wie möglich betrieben werden. Zumindest soll eine zu bisherigen Lösungen alternative Lösung vorgeschlagen werden.

Erfindungsgemäß wird somit ein Verfahren gemäß Anspruch 1 vorgeschlagen, nämlich ein Verfahren zum Betreiben einer elektrischen Ladestation an einem elektrischen Netz, insbesondere eines Inselnetzes, das neben elektrischen Verbrauchern wenigstens einen regenerativen Erzeuger, insbesondere eine Windenergieanlage oder einen Windpark, wenigstens einen durch fossile Brennstoffe betriebenen Generator, insbesondere Diesel-generator und wenigstens die elektrische Ladestation zum Speichern und wieder Abgeben elektrischer Leistung aufweist und die folgenden Schritte umfasst:

- Erzeugen elektrischer Leistung mittels der wenigstens einen Windenergieanlage und Einspeisen der elektrischen Leistung in das Inselnetz,
- Speichern elektrischer Leistung, die von den Verbrauchern nicht verbraucht wird, in der Ladestation,
- Einspeisen elektrischer Leistung durch die Ladestation, wenn die Verbraucher mehr Leistung verbrauchen, als der wenigstens eine regenerative Erzeuger und der wenigstens eine konventionelle Generator zusammen in das Netz einspeisen,

wobei

- in einer ersten Konstellation des Netzes eine in das Netz eingespeiste Einspeiseleistung eine Summe ist aus
  - der Leistung des wenigstens einen regenerativen Energieerzeugers und
  - der Leistung der Ladestation und optional zusätzlich aus
  - der Leistung des wenigstens einen weiteren der Ladestation zugeordneten Generators,

  wobei die Ladestation so gesteuert wird, dass die Einspeiseleistung in ihrer zeitlichen Anderung begrenzt wird, wobei die von der Ladestation abzugebende bzw. aufzunehmende Leistung abhängig von einem Ladezustand um einen Ausgleichswert verändert wird, um den aktuellen Ladezustand einem vorgegebenen Zielladezustand anzunähern,

wobei zum Begrenzen der zeitlichen Änderung der Einspeiseleistung zwei Grenzgradienten vorgegeben werden, nämlich

- ein Anstiegsgrenzgradient, der bestimmt, mit welcher Änderung pro Zeit sich die Einspeiseleistung maximal erhöhen soll, und
- ein Verringerungsgrenzgradient, der bestimmt, mit welcher Änderung pro Zeit sich die Einspeiseleistung maximal verringern soll,
  und wobei die Ladestation so gesteuert wird,
- dass die Änderung der Einspeiseleistung innerhalb einer positiven und negativen Grenze bzw. innerhalb des Anstiegsgrenzgradienten und des Verringerungsgrenzgradienten geführt wird und dass für den Fall der ersten Konstellation
- die Änderung der Einspeiseleistung positiv ist, wenn die Ladestation einen Ladezustand aufweist, der über einem vorgegebenen Zielladezustand liegt oder
- die Änderung der Einspeiseleistung negativ ist, wenn die Ladestation einen Ladezustand aufweist, der unter einem vorgegebenen Zielladezustand liegt.

Die Ladestation ist insoweit ein System mit einer oder mehreren Batterien, die geladen und entladen werden können. Das Laden und Entladen erfolgt damit über die Verbindung zum elektrischen Inselnetz. Die Batterie kann also bei Leistungsüberschuss im Netz geladen und im umgekehrten Fall entladen werden, um dadurch Leistung ins Netz einzuspeisen. Das Entladen beschreibt hierbei auch einen Vorgang, bei dem die Batterie nur teilweise und ggf. auch nur zu einem kleinen Teil entladen wird. Das elektrische Inselnetz wird hier vereinfachend einfach als Netz bezeichnet. Solche Inseinetze werden auch als Wechselspannungsnetze betrieben und entsprechend ist auch die Ladestation dazu vorbereitet, einen elektrischen Wechselstrom in das Netz einzuspeisen, Die Erfindung ist besonders für ein Inselnetz vorgesehen, kann aber grundsätzlich auch in einem anderen elektrischen Versorgungsnetz Anwendung finden.

Mit dem wenigstens einen regenerativen Erzeuger, insbesondere einer Windenergieanlage oder eines Windparks, wird elektrische Leistung aus regenerativen Energiequellen erzeugt und in das Inselnetz, das hier repräsentativ auch für andere Netze genannt wird, eingespeist. Das Erzeugen elektrischer Leistung steht hierbei vereinfachend für das Umwandeln mechanischer oder anderer Leistung, z.B. Solarenergie, in elektrische Leistung. Entsprechend wird hier mechanische bzw. andere Energie in elektrische Energie umgewandelt. Beim Speichern elektrischer Leistung wird momentane Leistung von der 30 Ladestation aus dem Netz entnommen und in der Ladestation, insbesondere in Batterien, gespeichert, so dass im Ergebnis Energie gespeichert wird. Für das Einspeisen regenerativer Energie in das Inselnetz ist hierbei vorzugsweise wenigstens ein Windpark vorgesehen, der mehrere Windenergieanlagen umfasst. Ausnahmsweise, wenn das Inselnetz entsprechend klein oder die Windenergieanlage ent-sprechend groß ist, könnte bspw. auch die Verwendung nur einer einzigen Windenergieanlage ausreichen.

Weiterhin ist ein Dieselgenerator vorhanden, der hier auch repräsentativ für andere mögliche Generatoren steht, die durch fossile Brennstoffe betrieben werden. Dies könnte bspw. ein mit Öl oder Gas betriebener Generator sein. Jegliche nachfolgenden Ausführungen, sofern nicht ausdrücklich anders erläutert, die zu einem Dieselgenerator gemacht werden, beziehen sich grundsätzlich auch auf andere mögliche Generatoren, die durch fossile Brennstoffe betrieben bzw. angetrieben werden.

Es ist nun ein Ziel der Erfindung, die Ladestation und damit die dort vorhandenen Batterien möglichst schonend oder zumindest schonender als bisher zu betreiben und dabei möglichst stetig ins Netz einzuspeisen. Hierzu ist besonders der Ladezustand der betreffenden Batterien zu berücksichtigen. Grundsätzlich ist es ungünstig, wenn solche Batterien vollständig entladen werden, es ist also besonders eine sog. Tiefenentladung zu vermeiden. Auch das vollständige Laden einer Batterie auf 100 Prozent kann ungünstig sein. Es kommt hinzu, dass extreme Ladezustände, also eine fast vollständige Aufladung oder eine fast vollständige Entladung, die Handlungsfähigkeit der Ladestation einschränken. Bspw. kann eine fast vollständig entladene Ladestation keine Leistung zur Regelung der Einspeisung bereitstellen.

Die Erfindung schlägt nun vor, für das Laden oder Entladen der Ladestation, im Ergebnis also der Batterie oder mehreren Batterien der Ladestation, maximale Gradienten, nämlich Grenzgradienten, vorzugeben, was auch anschaulich gesprochen als maximale Flanken bezeichnet werden kann.

Es wird also eine Flanke vorgegeben, mit der sich die Leistung, die die Ladestation in das Netz einspeist, maximal erhöhen soll. Das wird hier auch als Anstiegsgrenzgradient bezeichnet. Außerdem wird ein Wert vorgegeben, mit dem sich diejenige Leistung maximal erhöhen soll, die die Ladestation aus dem Netz entnimmt und mit der dann die Batterien geladen werden. Mit anderen Worten wird also hier die Dynamik der Änderung vorgegeben. Überraschenderweise konnte dadurch nun auch der absolute Ladepegel der Ladestation bzw. ihrer Batterien, der hier auch als Ladezustand bezeichnet wird, beeinflusst werden. Durch entsprechende Wahl dieser beiden Maximalwerte kann für einen längeren Zeitraum erreicht werden, dass sich der Ladepegel tendenziell eher nach oben oder tendenziell eher nach unten, oder zu einem mittleren Wert bewegt. Es kann der Ladepegel dadurch zu einer oberen Grenze, zu einer unteren Grenze oder zu einem anderen Bereich gesteuert werden.

Solche oberen und unteren Grenzen können vorgegeben werden, um ein komplettes Vollladen der Batterie oder ein vollständiges Entladen der Batterie zu verhindern. Tendiert bspw. der Ladepegel zur unteren Grenze, kann durch ein Verringern des Gradienten für das Einspeisen elektrischer Leistung durch die Ladestation, erreicht werden, dass der Ladepegel nicht mehr oder weniger zu dieser unteren Grenze tendiert. Das kann also durch ein Abflachen der maximalen Flanke zum Einspeisen elektrischer Leistung in das Netz durch die Ladestation erreicht werden.

Es ist dadurch möglich, die Ladestation so zu regeln, dass der Ladezustand zwischen diesen beiden vorgegebenen Grenzwerten bleibt, ohne dass der Ladezustand unmittelbar zur Steuerung ausgewertet wird. Natürlich kann auch noch eine Sicherheitsabfrage vorgesehen sein, die ein Unterschreiten des unteren Ladepegelgrenzwertes oder Überschreiten des oberen Ladepegelgrenzwertes verhindert. Dies sollte aber eine ausnahmsweise Notmaßnahme sein und die durchgängige Regelung kann darauf vielmehr verzichten und den Ladepegel im Normalbetrieb des Inselnetzes in den gewünschten Grenzen führen, ohne diese Grenzen dabei jedes Mal unmittelbar zu überwachen.

Das vorgeschlagene Verfahren kann dabei grundsätzlich für zwei Konstellationen eingesetzt werden. Bei der ersten Konstellation setzt sich die Einspeiseleistung aus der Leistung des wenigstens einen regenerativen Erzeugers und der Leistung der Ladestation zusammen. Diese regenerativen Erzeuger und die Ladestation sind insoweit zusammengefasst. Bspw. kann die Ladestation Teil eines Windparks mit mehreren Windenergieanlagen sein. Schwankt die Windleistung, um bei diesem Beispiel zu bleiben, zu stark, kann die Ladestation entsprechend gegensteuern. Die eingespeiste Einspeiseleistung lässt sich zusammen aus der Leistung dieser Windenergieanlagen und der Ladestation. Fällt also die Windleistung stark ab, kann durch einen entsprechenden Anstieg der abgegebenen Leistung der Ladestation die Summe der Einspeiseleistung die gewünschte vorgegebene Grenze der Änderung einhalten.

Im Ergebnis speist dann diese Kombination der regenerativen Erzeuger mit der Ladestation zusammen eine in ihrer Änderung begrenzte Leistung in das Netz ein. Hierbei nimmt besonders das Netz diese zusammengesetzte Einspeiseleistung als wenig schwankend war und braucht entsprechend nicht eine zu starke Schwankung auszugleichen.

Ein solcher Zusammenschluss von regenerativen Erzeuger und der Ladestation, also bspw. Windpark mit Ladestation, kann auch durch einen konventionellen oder anderen weiteren Generator ergänzt werden. Ein solcher Generator wäre dann dieser Ladestation zugeordnet. Das bedeutet insbesondere, dass die Leistung der entsprechenden regenerativen Energieerzeuger, die Leistung der Ladestation und die Leistung dieses zusätzlichen Generators gemeinsam über einen gemeinsamen Netzanschlusspunkt in das Netz einspeist.

Bei einer anderen Konstellation wird die von wenigstens einem konventionellen Generator in das Netz eingespeiste Leistung als Einspeiseleistung betrachtet und ihre Änderungen werden gering gehalten. Bei dieser Konstellation wird diese Einspeiseleistung des wenigstens einen konventionellen Generators betrachtet. Der konventionelle Generator kann grundsätzlich dauerhaft stabil und gleichmäßig laufen. Schwankungen in seiner Einspeiseleistung treten allerdings auf, wenn er, bspw. als Dieselgenerator oder Gaskraftwerk, Schwankungen im Netz gegensteuert. Besonders hier liegt die Überlegung eines Inselnetzes zugrunde, was aber auch hier nicht beschränkend ist. Nehmen bspw. die Verbraucher des Netzes zusammen mehr Leistung ab, als noch einen Moment zuvor, steuert der konventionelle Generator gegen und erhöht seine Einspeiseleistung, um diesen erhöhten Verbrauch auszugleichen.

Für diesen Fall kommt nun die Ladestation zum Einsatz, die so viel Leistung in das Netz einspeist, dass sie wenigstens einen Teil dieser Leistungsschwankungen im Netz ausgleicht. Im Ergebnis kann dann der wenigstens eine konventionelle Generator mit weniger Änderung betrieben werden.

Dadurch wird besonders dieser wenigstens eine konventionelle Generator weniger belastet. Dabei steht ein solcher konventioneller Generator auch repräsentativ für solche Generatorstationen, die mehrere solcher Generatoren aufweisen. Ein starker Anstieg der einzuspeisenden Leistung, also der Einspeiseleistung, führt regelmäßig dazu, dass in einer solchen Generatorstation ein weiterer Generator zugeschaltet wird. Bei einem entsprechenden Abfall der abzugebenden Leistung wird entsprechend wenigstens ein Generator weggeschaltet. Besonders ein solches zu häufiges Zu- und Wegschalten konventioneller Generatoren wird besonders für diese zweite Konstellation vermieden.

In jedem Fall erfolgt aber die entlastende Handlung durch die Ladestation so, dass die Einspeiseleistung in ihrer zeitlichen Änderung begrenzt wird, also nicht zu stark ansteigt und auch nicht zu stark abfällt.

Vorzugsweise wird zum Begrenzen dieser zeitlichen Änderung der Einspeiseleistung wenigstens ein Grenzgradient vorgegeben. Dieser kann ein Anstiegsgrenzgradient sein, der bestimmt, mit welcher Änderung pro Zeit sich die Einspeiseleistung maximal erhöhen soll. Als zweiter Grenzgradient wird ein Verringerungsgrenzgradient vorgeschlagen, der bestimmt, mit welcher Änderung pro Zeit sich die Einspeiseleistung maximal verringern soll. Je nach Anwendungsfall kommt auch in Betracht, dass nur einer dieser beiden Grenzgradienten vorgegeben wird, vorzugsweise werden aber beide dieser Grenzgradienten vorgegeben.

Dadurch kann die Begrenzung der Leistungsänderung gesteuert werden und gleichzeitig gibt auch die Wahl dieser Grenzgradienten die Möglichkeit, diesen durch die Ladestation stützenden Beitrag zu beeinflussen. Insbesondere kann die Wahl der Grenzgradienten den Verlauf des Ladezustands der Ladestation beeinflussen.

Vorzugsweise sind der Anstiegsgrenzgradient und der Verringerungsgrenzgradient unterschiedlich zueinander. Dadurch kann u.a. auch Einfluss auf den mittleren Ladezustand der Ladestation genommen werden, der sich im Laufe der Zeit einstellt. Wobei im Laufe der Zeit besonders für den Zeitabschnitt eines Tages steht.

Gemäß der Erfindung wird die Ladestation so gesteuert, dass die Änderung der Einspeiseleistung innerhalb des Anstiegsgrenzgradienten und des Verringerungsgrenzgradienten geführt wird und dass die Änderung der Einspeiseleistung positiv ist, wenn die Ladestation einen Ladezustand aufweist, der über einem vorgegeben Zielladezustand liegt, oder dass die Änderung der Einspeiseleistung negativ ist, wenn die Ladestation einen Ladezustand aufweist, der unter einem vorgegebenen Zielladezustand liegt. Der Verringerungsgrenzgradient ist hier insoweit natürlich ein negativer Wert. Veranschaulichend gibt also der Anstiegsgrenzgradient eine ansteigende Flanke und der Verringerungsgrenzgradient eine abfallende Flanke als Grenze vor. Die Änderung der Einspeiseleistung wird somit innerhalb einer positiven und negativen Grenze gehalten.

Während die Einspeiseleistung innerhalb dieser beiden Grenzen gehalten wird bzw. geführt wird, hat die Ladestation noch Spielraum in der konkreten Führung. Hier wird nun vorgeschlagen, dass sie diesen Spielraum so ausnutzt, dass die Änderung der Einspeiseleistung eher positiv ist, wenn die Ladestation vereinfachend ausgedrückt gut geladen ist. In dieser Situation hat die Ladestation viel gespeicherte Energie zur Verfügung und kann dadurch tendenziell etwas mehr Leistung einspeisen und dadurch ihren Ladezustand nebenbei Richtung Zielladezustand absenken.

Andernfalls, wenn der Ladezustand vergleichsweise gering ist, kann die Ladestation ihren Spielraum so ausnutzen, dass sie tendenziell eher weniger Leistung einspeist, was natürlich auch beinhaltet tendenziell eher mehr Leistung aus dem Netz aufzunehmen und einzuspeichern. Dadurch wird der Ladezustand in Richtung zum Zielladezustand geführt.

Es ist zu beachten, dass es trotzdem möglich ist, dass bei besonders starkem Leistungsabfall, gegen den die Ladestation gegenarbeiten muss, Leistung von der Ladestation ins Netz eingespeist wird, obwohl der Ladezustand vergleichsweise niedrig ist, zumindest aber unter dem vorgegebenen Zielladezustand liegt, denn das Einhalten der maximalen Änderungen steht im Vordergrund.

Es liegt aber die Erkenntnis zugrunde, dass über den längeren Betrieb, also insbesondere über einen Tag, die Entwicklung des Ladezustands der Ladestation im Wesentlichen zum vorgegebenen Zielladezustand hin beeinflusst werden kann. Im statistischen Mittel könnte grundsätzlich immer dieser Zielladezustand, also bspw. 50% der Vollladung, erreicht werden. Allerdings können die Schwankungen, die gerade bei Windenergieanlagen stetig auftreten, so ausfallen, dass der Ladezustand dennoch nicht zum Zielladezustand hin tendiert, sondern zu einem maximalen oder minimalen Ladezustand. Als eine Möglichkeit dem entgegenzuwirken wird vorgeschlagen, die Grenzgradienten oder zumindest einen der Grenzgradienten, also den Anstiegsgrenzgradienten oder den Verringerungsgrenzgradienten, zu verändern.

Vorzugsweise wird wenigstens einer der Grenzgradienten adaptiv eingestellt. Der oder die Grenzgradienten können dann also im Betrieb z.B. abhängig des Ladezustandes, verändert werden. Ist also bspw. der Ladezustand generell sehr hoch, nämlich über dem Zielladezustand, so könnte der Anstiegsgrenzgradient erhöht oder der Verringerungsgrenzgradient verringert werden, damit die Ladestation tendenziell mehr stabilisierende Leistung einspeist, als stabilisierende Leistung aus dem Netz zu entnehmen und zu speichern, um nur ein Beispiel zu nennen.

Vorzugsweise wird der Grenzgradient oder die Grenzgradienten abhängig von einem mittleren Ladezustand der Ladestation eingestellt. Es wird also bspw. mit Hilfe eines Filters oder einer Integration, über einen längeren Zeitraum wie bspw. einige Stunden oder ein Tag die Entwicklung des Ladezustands beobachtet und gemittelt, um einen mittleren Ladezustand zu erhalten. Davon abhängig können dann die Grenzgradienten, oder zumindest einer von ihnen, eingestellt werden.

In ähnlichem Maße kann vorzugsweise auch ein maximaler Ladezustand vorgegeben werden, der nicht überschritten werden soll. Ähnliches gilt für die Vorgabe eines vorbestimmten minimalen Ladezustands. Vorzugsweise kann die Einstellung so erfolgen, dass der mittlere Ladezustand tendenziell einen vorbestimmten Ladesollwert annimmt, der auch als Zielladezustand bezeichnet werden kann.

Die konkrete Einstellung der Grenzgradienten kann hierbei bspw. in einer Simulation zuvor geprüft werden. Außerdem oder alternativ kommt auch in Betracht, die Grenzwerte nach und nach, bspw. tagesweise, etwas zu ändern und die Entwicklung des Ladezustands der Ladestation zu beobachten und dann einen entsprechenden Grenzgradient bzw. entsprechende Grenzgradienten auszuwählen.

Gemäß einer Ausführungsform wird vorgeschlagen, dass wenigstens einer der Grenzgradienten aus einem vorgegebenen Basisgrenzgradienten, multipliziert mit wenigstens einem Gewichtungsfaktor berechnet wird. Hier kann besonders als Basisgrenzgradient ein Grenzgradient, also Anstiegsgrenzgradient oder Verringerungsgrenzgradient, als unbedingt einzuhaltende Grenze vorgegeben werden. Ein Gewichtungsfaktor, oder das Produkt mehrerer Gewichtungsfaktoren zusammen, kann dann so gewählt werden, dass es maximal den Wert 1 annimmt. Somit würde der Basisgrenzgradient nicht überschritten, bzw. bei einem negativen Wert für den Verringerungsgrenzgradienten nicht unterschritten. In beiden Fällen würde also der Betrag nicht mehr erhöht, sondern allenfalls durch einen Faktor, der kleiner als 1 ist, verringert werden.

Vorzugsweise hängt wenigstens einer der Gewichtungsfaktoren von dem Ladezustand der Ladestation ab. Außerdem oder alternativ kann wenigstens einer der Gewichtungsfaktoren im Bereich von 0 bis 1 variieren. Er kann dann also den Basisgrenzgradienten den Betrag nach nicht erhöhen.

Vorzugsweise kann ein weiterer Gewichtungsfaktor so gewählt werden, dass er wenigstens den Wert 1 aufweist, insbesondere im Bereich von 1 bis 10 liegt. Vorzugsweise können zwei Gewichtungsfaktoren kombiniert werden, von denen einer im Bereich von 0 bis 1 liegt und der andere im Bereich über 1, insbesondere im Bereich von 1 bis 10 liegt. Werden diese zusammen mit dem Basisgrenzgradienten multipliziert und soll dieser Basisgrenzgradient nicht steigen, kann die Wahl dieser beiden Gewichtungsfaktoren so ausfallen, dass ihr Produkt nicht größer als 1 wird.

Eine Ausgestaltung schlägt vor, dass

- die Ladestation elektrische Leistung abgibt, die zusammen mit elektrischer Leistung des wenigstens einen regenerativen Energieerzeugers in das Netz eingespeist wird, wenn sich die elektrische Leistung des regenerativen Energieerzeugers mit einem Gradienten verringert, der dem Betrage nach größer ist als der vorgegebene Verringerungsgrenzgradient, oder dass
- die Ladestation elektrische Leistung aufnimmt, um die in das Netz eingespeiste elektrische Leistung des wenigstens einen regenerativen Energieerzeugers zu verringern, wenn sich die elektrische Leistung des regenerativen Energieerzeugers mit einem Gradienten erhöht, der dem Betrage nach größer ist als der vorgegebene Anstiegsgrenzgradient.

Demnach gibt die Ladestation elektrische Leistung ab, wenn sich die elektrische Leistung des regenerativen Erzeugers, insbesondere der Windenergieanlage oder des Windparks zu stark bzw. zu schnell verringert. Die Ladestation kann dadurch gegensteuern. Umgekehrt wird hierbei vorgeschlagen, dass die Ladestation elektrische Leistung aufnimmt und, wenn sich die Leistung des regenerativen Energieerzeugers zu stark bzw. zu schnell erhöht. In beiden Fällen wird dadurch die insgesamt eingespeiste Einspeiseleistung in den gewünschten Grenzen gehalten.

Vorzugsweise wird zudem vorgeschlagen, dass zum Steuern der Ladestation eine Zeitdifferenz zwischen einem aktuellen zweiten Zeitpunkt und einem früheren ersten Zeitpunkt berücksichtigt wird, und dass zu dem früheren ersten Zeitpunkt als früherer Einspeisegradient ein Gradient der Leistung berücksichtigt wird, die zu dem ersten Zeitpunkt von dem wenigstens einen regenerativen Energieerzeuger und der Ladestation und ggf. wenigstens einem weiteren Generator zusammen in das Netz eingespeist wurde.

Zum Steuern der Ladestation werden somit Messungen zu zwei Zeitpunkten zugrundegelegt einschließlich der Zeitdifferenz zwischen diesen Zeitpunkten. Es wird hierbei ein Gradient der Leistung zu einem vorherigen Zeitpunkt zugrundegelegt. Insbesondere wird zu diesem früheren Zeitpunkt der Gradient verwendet, ohne dazu die genannte Zeitdifferenz zu verwenden.

Vorzugsweise wird ausgehend von diesen beiden Messzeitpunkten, der Zeitdifferenz und dem früheren Einspeisegradient die von der Ladestation zu dem zweiten Zeitpunkt abzugebende bzw. aufzunehmende Leistung berechnet. Dies erfolgt vorzugsweise in Abhängigkeit des Ladezustandes der Ladestation. Hierzu wird vorgeschlagen, dass diese zu dem zweiten Zeitpunkt abzugebende bzw. aufzunehmende Leistung aus einem Produkt berechnet wird, dass sich zusammensetzt aus

- der Zeitdifferenz und
- einer Differenz zwischen
  - dem Betrag des Anstiegsgrenzgradienten und
  - dem früheren Einspeisegradienten, wenn

  die Ladestation einen Ladezustand aufweist, der über einem vorgegebenen Zielladezustand liegt, oder ansonsten aus einem Produkt aus
- der negativen Zeitdifferenz und
- der Summe
  - des Betrags des Verringerungsgrenzgradienten und
  - dem früheren Einspeisegradienten.

Demnach wird der Anstiegsgrenzgradient verwendet, wenn die Ladestation einen vergleichsweise hohen Ladezustand aufweist und es wird der Verringerungsgrenzgradient verwendet, wenn die Ladestation einen vergleichsweise niedrigen Ladezustand aufweist, um es anschaulich auszudrücken.

Durch diese Berechnung werden die Grenzgradienten, also Anstiegsgrenzgradient und Verringerungsgrenzgradient, eingehalten und gleichzeitig erfolgt eine Berechnung der abzugebenden bzw. aufzunehmenden Leistung der Ladestation abhängig von ihrem Ladezustand. Es wird also gleichzeitig, soweit die Situation das zulässt, die Entwicklung des Ladezustandes der Ladestation beeinflusst, um ihn möglichst in einen gewünschten Bereich zu steuern.

Vorzugsweise werden zu den unterschiedlichen Messzeitpunkten auch unterschiedliche Messorte zugrundegelegt. Zu dem ersten Zeitpunkt wird vorgeschlagen, einen Messwert eines ersten Messpunktes zu wählen und zu dem zweiten Zeitpunkt einen Messwert eines zweiten Messpunktes zu verwenden. Im laufenden Betrieb wird somit gleichzeitig an dem ersten und zweiten Messpunkt bzw. Messort gemessen, es wird aber jeweils von dem ersten Messpunkt der Messwert des ersten Zeitpunktes verwendet, also der frühere Messwert und an dem zweiten Messpunkt der Messwert des zweiten Zeitpunktes, also der aktuelle Messwert. Der frühere Messwert und damit der erste Messpunkt betreffen den früheren Einspeisegradienten. Dieser wird entsprechend am Einspeisepunkt in das Netz gemessen, oder an einer Stelle in der Nähe, über die dieselbe Leistung übertragen wird.

An dem ersten Messpunkt und zu dem ersten Zeitpunkt wird dabei die aktuelle Leistungsabgabe bzw. Aufnahme der Ladestation gemessen, um darauf basierend die nun neu berechnete von der Ladestation abzugebenden bzw. aufzunehmenden Leistung einzustellen. Insoweit nimmt die Messung zum ersten Zeitpunkt am ersten Messpunkt besonders Einfluss auf die konkrete Einstellung der von der Ladestation bereitzustellenden Leistung. Entsprechend wird auch vorgeschlagen, dass der zweite Messpunkt am Ausgang der Ladestation angeordnet ist. Eine solche Messung an unterschiedlichen Orten zu unterschiedlichen Zeiten kann ggf. einer Instabilität vorbeugen, die entstehen könnte durch die sofortige Verwendung eines Messwertes in einer Berechnung, die diesen Messwert unmittelbar beeinflusst.

Gemäß einer weiteren Ausführungsform wird vorgeschlagen, dass die von der Ladestation abzugebende bzw. aufzunehmende Leistung abhängig von einem Ladezustand um einen Ausgleichswert verändert wird, um den aktuellen Ladestand zu einem vorgegebenen Zielladezustand anzunähern. Es wird somit vorgeschlagen, unabhängig von dem Steuern der Ladestation so, dass die Grenzgradienten eingehalten werden, die Ladestation in geringem Maße aufzuladen oder zu entladen. Beispielsweise kann die Ladestation mit einer geringen Leistung geladen werden, während sie ohnehin zum Steuern gar nicht aktiv ist, beispielsweise bei Windstille des Windparks, wenn dieser den regenerativen Erzeuger bildet. Hierdurch kann einer Situation entgegengewirkt werden, bei der sich der Ladezustand von dem gewünschten Zielladezustand immer mehr entfernt. Das kann auch ein Phänomen sein, das beispielsweise nur an einem Tag auftritt.

Gemäß einer Ausführungsform wird vorgeschlagen, dass

- die Ladestation elektrische Leistung in das Netz einspeist, wenn sich die von dem wenigstens einen konventionellen Generator in das Netz eingespeiste elektrische Leistung mit einem Gradienten erhöht, der dem Betrage nach größer ist als der vorgegebene Anstiegsgrenzgradient, oder dass

- die Ladestation elektrische Leistung aus dem Netz aufnimmt, wenn sich die von dem wenigstens einen konventionellen Generator in das Netz eingespeiste elektrische Leistung mit einem Gradienten verringert, der dem Betrage nach größer ist als der vorgegebene Verringerungsgrenzgradient.

Diese Ausführungsform wird besonders für den Fall vorgeschlagen, wenn der wenigstens eine konventionelle Generator und die Ladestation nicht über einen gemeinsamen Einspeisepunkt in das Netz einspeisen. Die Ladestation speist also so in das Netz ein, dass sie zumindest einen Teil der Leistungsschwankungen im Netz so ausgleicht, dass sich für den konventionellen Generator kein Bedarf mehr für eine zu starke Leistungsänderung ergibt.

Eine Ausgestaltung schlägt vor, dass der wenigstens eine regenerative Erzeuger, insbesondere die Windenergieanlage

- kurzzeitig ihre eingespeiste Leistung über die in dem Moment maximal aus dem Wind verfügbare Leistung erhöht,

- kurzzeitig ihre eingespeiste Leistung über die momentan eingespeiste Leistung erhöht,

- kurzzeitig ihre eingespeiste Leistung unter die in dem Moment maximal aus dem Wind verfügbare Leistung verringert, oder

- kurzzeitig ihre eingespeiste Leistung unter die momentan eingespeiste Leistung verringert,

um dadurch durch die Ladestation oder durch den wenigstens einen konventionellen Generator auszugleichende Leistungsspitzen zu verringern.

Erfindungsgemäß wird eine vorteilhafte Begrenzung von Leistungsänderungen eingespeister Leistung durch entsprechende Steuerung einer Ladestation vorgeschlagen. Es wurde aber erkannt, dass dies synergetisch mit einer Steuerung des regenerativen Erzeugers, insbesondere mit einer Steuerung einer oder mehrerer Windenergieanlagen verbunden werden kann. Regenerative Erzeuger, insbesondere Windenergieanlagen, erzeugen vorzugsweise so viel Leistung, wie aufgrund der aktuellen Bedingungen möglich ist. Eine Windenergieanlage erzeugt also möglichst so viel Leistung wie in dem aktuellen Moment dem Wind entnommen werden kann. Dadurch entstehende Schwankungen können durch den Einsatz der Ladestation begrenzt werden. Gleichwohl kann es hilfreich sein, auch die Windenergieanlage zum Steuern einzusetzen. Besonders dann, wenn die Ladestation einen ungünstigen Ladezustand aufweist, kann eine kurzfristige Übernahme oder Ergänzung der Steuerung durch die Windenergieanlage hilfreich sein. Die Windenergieanlage kann dabei ihre Leistung erhöhen oder verringern. Sie kann sie über den aktuellen Wert erhöhen oder darunter verringern oder aber auch über die verfügbare Leistung aus dem Wind erhöhen oder darunter verringern. Eine solche Erhöhung ist besonders kurzfristig durch Verwendung kinetischer Energie des Rotors der Windenergieanlage möglich.

Hierdurch kann u.a. auch erreicht werden, dass die Ladestation kleiner und kostengünstiger ausgebildet wird. Eine Ladestation kann so dimensioniert werden, dass sie ihre Aufgabe beispielsweise an 95% aller Tage im Jahr erfüllen kann. Um auch noch diese letzten 5% der Tage im Jahr abzudecken, müsste sie ggf. signifikant größer ausgelegt werden. Es wäre entbehrlich, wenn in diesem Fall die Windenergieanlage- oder anlagen ausnahmsweise die Aufgabe der Ladestation übernehmen oder ergänzen.

Erfindungsgemäß wird zudem ein elektrisches Versorgungsnetz vorgeschlagen, dass auch einfach als elektrisches Netz bezeichnet werden kann. Insbesondere wird ein elektrisches Inselnetz vorgeschlagen. Dieses Netz ist dazu vorbereitet, mit einem Verfahren gemäß einem der obigen Ausführungsformen betrieben zu werden.

Erfindungsgemäß wird zudem eine Ladestation vorgeschlagen, die vorbereitet ist, in dem vorgeschlagenen Netz betrieben zu werden.

Erfindungsgemäß wird zudem eine Windenergieanlage vorgeschlagen, die dazu vorbereitet ist, in dem genannten elektrischen Netz betrieben zu werden.

Erfindungsgemäß wird auch ein Windpark vorgeschlagen, der dazu vorbereitet ist, als regenerativer Erzeuger in einem elektrischen Netz wie oben beschrieben verwendet zu werden.

Nachfolgend wird die Erfindung anhand von Ausführungsbeispielen unter Bezugnahme auf die begleitenden Figuren beispielhaft näher erläutert.

| | |
|---|---|
| Fig. 1 | zeigt eine Windenergieanlage schematisch in einer perspektivischen Darstellung. |
| Fig. 2 | zeigt einen Windpark mit mehreren Windenergieanlagen in einer schematischen Darstellung. |
| Fig. 3 | zeigt ein elektrisches Netz mit einer Windenergieanlage, einer Ladestation, einem konventionellen Generator und Verbrauchern gemäß einer ersten Konstellation. |
| Fig. 4 bis 9 | veranschaulichen die Steuerung einer Ladestation gemäß einer Ausführungsform und für die Konstellation gemäß Fig. 3 für verschiedene Zustände bzw. Randbedingungen in Bezug auf vorgegebene Grenzgradienten. |
| Fig. 10 | zeigt den zeitlichen Verlauf einiger Leistungen für unterschiedliche Parametrierungen der Steuerung der Ladestation. |
| Fig. 11 | zeigt jeweils zu der der Fig. 10 zugrunde liegenden Steuerung den zeitlichen Verlauf eines Ladezustandes der gesteuerten Ladestation. |
| Fig. 12 | zeigt ein elektrisches Netz mit einer Windenergieanlage, einer Ladestation, einem konventionellen Generator und Verbrauchern gemäß einer zweiten Konstellation. |

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Fig. 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

Die vorliegende Erfindung betrifft somit eine Strategie zum Laden und Entladen eines mit einem Netz gekoppelten Energiespeichers, die ermöglicht Leistungsgradienten zu limitieren, welche beispielsweise durch erneuerbare Energieerzeuger wie bspw. Windenergieanlagen oder Photovoltaikanlagen entstehen können.

Der Energiespeicher wird hier auch als Ladestation oder einfach als Batterie bezeichnet. Der Energiespeicher bzw. die Ladestation kann dabei aber Steuerungsmittel zum Steuern des Ladens und Entladen beinhalten.

Verschiedene Netzkonfigurationen können zu Grunde liegen, die durch die Verschaltung der Windenergieanlage, der Ladestation bzw. Batterie und des konventionellen Generators gekennzeichnet sein können. Im Folgenden wird zur beispielhaften Erläuterung der Erfindung eine in Fig. 3 dargestellten Netzkonfiguration zu Grunde gelegt.

Gemäß Fig. 3 ist schematisch ein elektrisches Versorgungsnetz 1 dargestellt, das Verbraucher 2 mit elektrischem Strom versorgen soll. Als Energieerzeuger ist ein konventioneller Generator 4 an das Netz 1 angeschlossen. Außerdem ist wenigstens eine Windenergieanlage 6 und eine Ladestation 8 über einen Netzeinspeisepunkt 10 an das Netz angeschlossen. Sämtliche schematisch dargestellte Teile des Netzes 1, nämlich Verbraucher 2, konventioneller Generator 4, Windenergieanlage 6 und Ladestation 8 können auch jeweils mehrere solcher Elemente ihrer Art beinhalten bzw. repräsentativ dafür stehen. Insbesondere steht auch die Windenergieanlage 6 repräsentativ für einen Windpark 6.

Die Windenergieanlage 6 stellt eine Leistung $P_{wec}(t)$ bereit und die Ladestation 8, die auch vereinfachend als Batterie 8 bezeichnet werden kann, stellt eine Leistung $P_{bat}(t)$ zur Verfügung. Diese Leistungen können somit über die Zeit variieren und ihre Summe wird an dem Netzeinspeisepunkt 10 in das Netz 1 eingespeist. Sowohl die Leistung der Windenergieanlage $P_{wec}(t)$ als auch die Leistung der Ladestation $P_{bat}(t)$ kann sowohl ins Netz eingespeist werden als auch aus dem Netz entnommen werden. Bei der Entnahme aus dem Netz bedeutet das für die Leistung $P_{bat}(t)$ der Ladestation 8, dass damit die Ladestation bzw. eine Batterie in der Ladestation geladen wird. Die Windenergieanlage 6 speist im Wesentlichen ein, könnte aber auch beispielsweise über Chopperwiderstände oder Zwischenspeicher Leistung aus dem Netz abnehmen und dadurch verbrauchen oder zwischenspeichern, falls dies zur Netzstützung erforderlich oder hilfreich ist. Außerdem sind in Fig. 3 diverse Schalter S symbolisch dargestellt, die das jeweilige Element vom Netz trennen können.

Bei dieser Konstellation gemäß Fig. 3 ist eine in das Netz 1 eingespeiste Einspeiseleistung die Summe der Leistung $P_{wec}$ der Windenergieanlage 6 und der Leistung $P_{bat}$ der Ladestation 8. Diese Summe kann auch als $P_{grid}$ bezeichnet werden. Das ist also die Leistung, die an dem Netzeinspeisepunkt 10 in das Netz eingespeist wird bzw. im Falle eines negativen Vorzeichens dort entnommen wird. Auch der konventionelle Generator 4 speist Leistung ein, die bei der Betrachtung, die der Fig. 3 zugrunde liegt, aber keine Erwähnung findet.

Optional könnte der Windenergieanlage 6 und der Ladestation 8 ein weiterer konventioneller Generator zugeordnet sein, dessen Leistung dann auch Teil der eingespeisten Einspeiseleistung $P_{grid}$ am Netzeinspeisepunkt 10 wäre. Ein solcher konventioneller Generator, also insbesondere Diesel-Generator könnte z.B. bei schwachem Wind zugeschaltet werden, um nur ein Beispiel zu nennen.

Bei dieser Konstellation wird dann vorgeschlagen, dass die Einspeiseleistung $P_{grid}$ in ihrer zeitlichen Änderung begrenzt wird. Es wird also vorgeschlagen, dass am Netzeinspeisepunkt 10 Leistungsänderungen und damit Leistungsgradienten der dort eingespeisten Leistung in Grenzen gehalten werden. Das kann erfindungsgemäß über eine entsprechende Steuerung der Ladestation 8 erfolgen.

Gemäß Fig. 3 speisen eine oder mehrere Windenergieanlagen 6 und das Batteriesystem 8, das auch als Ladestation bezeichnet werden kann, über einen gemeinsamen Netzeinspeisepunkt 10 in ein elektrisches Netz 1 ein, welches zusätzlich einen konventionellen Generator 4 und verschiedenen Verbrauchern aufweist.

Ein Leistungsgradient $\left.\frac{\Delta P}{\Delta t}\right|_{grid}(t)$ zum Zeitpunkt t, welcher am Netzeinspeisepunkt 10 eingespeist wird, kann wie folgt definiert werden:

$$[1] \quad \left.\frac{\Delta P}{\Delta t}\right|_{grid}(t) = \frac{P_{wec}(t2) - P_{grid}(t1)}{\Delta t}$$

wobei $P_{wec}(t2)$ die zum Zeitpunkt $t_2$ gemessenen Windparkleistung und $P_{grid}(t1)$ die zum Zeitpunkt t1 am Netzeinspeisepunkt gemessene Einspeiseleistung ist. $t_2$ ist hierbei der aktuelle, auf $t_1$ folgende Zeitpunkt. $\Delta t$ ist der zur Ermittlung der Leistungsgradienten gewählte Zeitschritt und ergibt sich aus der Differenz zwischen $t_2$ und $t_1$.

Soll der am Netzeinspeisepunkt eingespeiste Wirkleistungsgradient auf einen maximalen bzw. minimalen Grenzwert ( $\left.\frac{\Delta P}{\Delta t}\right|_{lim}^{down}$, $\left.\frac{\Delta P}{\Delta t}\right|_{lim}^{up}$ ) beschränkt werden bzw. innerhalb solcher Grenzwerte gehalten werden, so muss, je nach Art (positiv od. negativ) und Betrag des Gradienten (über, oder unter dem Grenzwert) dem Netz eine bestimmte Wirkleistung ($P_{bat}$) zugeführt, bzw. entzogen werden. Für eine solche Leistung wird vorgeschlagen, dass diese von einem Energiespeichersystem, das in dieser Anmeldung synonym als Ladestation 8 bezeichnet wird und z.B. als Batterie ausgebildet sein kann bzw. eine Batterie beinhalten kann, aufgenommen, bzw. abgegeben werden kann.

In Fig. 4 sind sowohl die Windenergieanlagenleistung $P_{wec}$ als auch die Leistung am Netzeinspeisepunkt $P_{grid}$ zu den aufeinanderfolgenden Zeitpunkten $t_1$ und $t_2$ dargestellt. $P_{grid}$ setzt sich dabei additiv aus $P_{wec}$ und $P_{bat}$ zusammen.

Die Leistung $P_{grid}(t1)$ am Netzeinspeisepunkt und die Windenergieanlagenleistung $P_{wec}(t1)$ sind in dieser Fig. 4 und auch in den Fig. 5 bis 9 zum Zeitpunkt $t_1$ als gleich angenommen. Zum Zeitpunkt $t_2$ sei die Windenergieanlagen-leistung $P_{wec}(t2)$ gegeben. Aus Gleichung [1] resultiert dann der Leistungsgradient $\frac{\Delta P}{\Delta t}\Big|(t2)$, welcher im Beispiel gemäß Fig. 4 größer als der obere Grenzwert $\frac{\Delta P}{\Delta t}\Big|_{lim}^{up}$ ist, der als oberer Grenzwert, nämlich als Anstiegsgrenzgradient gegeben ist.

Um am Netzeinspeisepunkt einen Leistungsgradienten von $\frac{\Delta P}{\Delta t}\Big|_{lim}^{up}$ zu gewährleisten, muss die Batterie zum Zeitpunkt $t_2$ die Leistung $P_{bat}(t2)$ aufnehmen. Diese ist im beschriebenen Fall negativ und berechnet sich als

$$[2]\quad P_{bat}(t) = \left(\frac{\Delta P}{\Delta t}\Big|_{lim}^{up} - \frac{\Delta P}{\Delta t}\Big|_{grid}(t)\right)\cdot \Delta t;$$

Die Kapazität eines Energiespeichers, welche erlaubt die Batterieleistung $P_{bat}$ zu stellen ist begrenzt. Die Verfügbarkeit der Batterieleisung $P_{bat}$ hängt vom Ladezustand der Batterie ab, der als *SoC* bezeichnet wird. Ist der Speicher ungeladen (SoC=0%) kann keine zusätzliche Leistung eingespeist werden. Ist der Speicher vollständig geladen (SoC=100%) kann keine zusätzliche Leistung aufgenommen werden.

Daher wird vorgeschlagen, den Speicher im Betrieb mit einem möglichst konstanten Ladezustand *SoC* zwischen den beiden Extrem-Ladezuständen zu betreiben. Ein solcher Ziel-Ladezustand kann als Sollwert $SoC_{target}$ vorgegeben werden. Damit der zeitliche Verlauf des Ladezustands *SoC* möglichst gering vom Sollladezustand $SoC_{target}$ abweicht, wird vorgeschlagen, dass sich Lade- und Entladeleistungen über ein zeitliches Mittel entsprechen.

Es wurde erkannt, dass der Betrag der Grenzgradienten $\frac{\Delta P}{\Delta t}\Big|_{lim}^{down}$ und $\frac{\Delta P}{\Delta t}\Big|_{lim}^{up}$, die als Verringerungsgrenz-gradient $\frac{\Delta P}{\Delta t}\Big|_{lim}^{down}$ bzw. Anstiegsgrenzgradient $\frac{\Delta P}{\Delta t}\Big|_{lim}^{up}$ vorgegeben werden können, folgenden Einfluss auf den Batteriebetrieb hat:

- Er wirkt sich auf die Wahrscheinlichkeit einer Batterieaufladung, bzw. Entladung aus
- Er wirkt sich auf die von der Batterie bereitzustellende bzw. aufzunehmende Leistung aus

Es wird nun vorgeschlagen, durch entsprechende Wahl der Grenzgradienten den Ladezustand der Batterie zu beeinflussen.

Das heißt, es wird abhängig von der Differenz des Ladezustandes *SoC* zum Sollladezustand $SoC_{target}$ ein unterer bzw. oberer Grenzwert ( $\frac{\Delta P}{\Delta t}\Big|_{lim}^{down}$ bzw. $\frac{\Delta P}{\Delta t}\Big|_{lim}^{up}$ ) eines Leistungsgradienten gewählt. Dadurch lässt sich steuern, ob die Batterie mit einer maximalen/minimalen Leistung geladen wird, bzw. mit einer maximalen/minimalen Leistung entladen wird.

Die Fig. 4 bis 9 veranschaulichen für drei exemplarische Lagen eines Leistungsgradienten $\frac{\Delta P}{\Delta t}\Big|(t)$, nämlich für die Einspeiseleistung $P_{grid}$, resultierende Batterieleistungen $P_{bat}(t)$, die durch das vorgeschlagene Verfahren erreicht werden. Die grundsätzliche Art der Darstellung wurde teilweise oben schon zu Fig. 4 erläutert und gilt sinngemäß auch für die übrigen Fig. 5 bis 9.

Diese drei exemplarischen Lagen stehen auch grundsätzlich für drei möglichen Lagen des Leistungsgradienten und das sind:

1. Der Leistungsgradient $\frac{\Delta P}{\Delta t}\Big|(t)$ ist größer als der obere Grenzgradient $\frac{\Delta P}{\Delta t}\Big|_{lim}^{up}$
2. Der Leistungsgradient $\frac{\Delta P}{\Delta t}\Big|(t)$ ist kleiner als der untere Grenzgradient $\frac{\Delta P}{\Delta t}\Big|_{lim}^{down}$
3. Der Leistungsgradient $\frac{\Delta P}{\Delta t}\Big|(t)$ ist kleiner als der obere Grenzgradient $\frac{\Delta P}{\Delta t}\Big|_{lim}^{up}$ und größer als der untere

Grenzgradient $\frac{\Delta P}{\Delta t}\Big|_{lim}^{down}$

Der obere Grenzgradient $\frac{\Delta P}{\Delta t}\Big|_{lim}^{up}$ wird auch synonym als Anstiegsgrenzgradient bezeich-net und der untere Grenzgradient $\frac{\Delta P}{\Delta t}\Big|_{lim}^{down}$ wird synonym auch als Verringerungsgrenzgradient bezeichnet.

Zusätzlich zu den genannten möglichen Lagen des Leistungsgradienten hat der Ladezustand der Ladestation bzw. ihrer Batterie oder Batterien einen Einfluss. Zur Erläuterung wird vereinfachend auch einfach von der Batterie besprochen. Der Ladezustand wird in den Figuren als SoC bezeichnet und in Bezug auf einen Zielladezustand betrachtet, der dort als $SoC_{target}$ bezeichnet wird.

Die Batterie kann sich in den folgenden zwei Ladezuständen befinden:

1. $SoC > SoC_{target}$

2. $SoC <= SoC_{target}$

Der theoretische Zustand, dass der Ladezustand exakt der Zielladung entspricht ($SoC = SoC_{target}$), ist hier der zweiten Variante zugeordnet worden, was nicht wesentlich ist.

Es lassen sich somit sechs mögliche Fälle bezüglich des Leistungsgradienten und Ladezustandes kombinieren, welche in Tabelle 1 und den Fig. 4 bis 9 gezeigt sind.

Tabelle 1 gibt für diese sechs Fälle die Gleichungen gemäß einer Ausführungsform an, über die die Batterieleistung $P_{bat}(t)$ bestimmt wird, um den Ladezustand SoC möglichst gegen den Zielladezustand $SoC_{target}$ konvergieren zu lassen. In der Tabelle sind auch die Figuren angegeben, die für diese sechs verschiedenen Fälle die entsprechenden Leistungsgradienten zeigen.

Tabelle I

| | | I) $SoC > SoC_{target}$ | II) $SoC <= SoC_{target}$ |
|---|---|---|---|

| | | | |
|---|---|---|---|
| a) | $\Delta P/\Delta t(t_2) > \Delta P/\Delta t\|_{lim}^{up}$ | 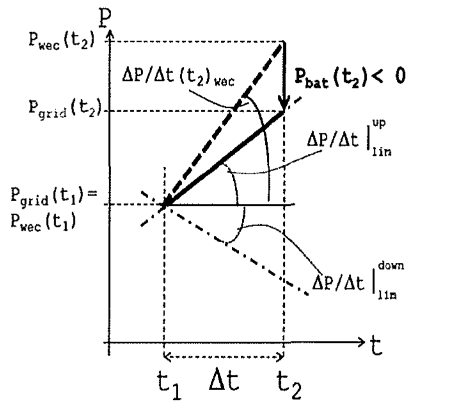<br>=> **Batterie wird minimal geladen**<br>=> $P_{bat}(t_2) = -(\Delta P/\Delta t(t_2)_{grid} - \Delta P/\Delta t\|_{lim}^{up}) * \Delta t$<br>=> $\Delta P/\Delta t(t_2)_{grid} = \Delta P/\Delta t\|_{lim}^{up}$ | 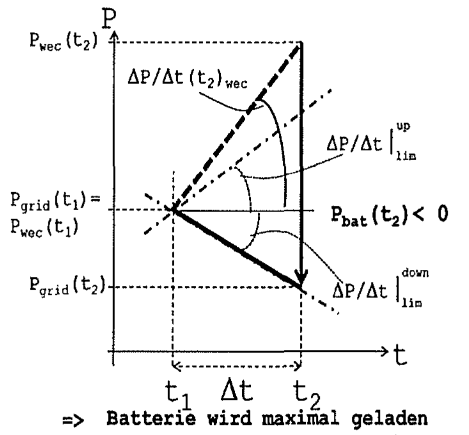<br>=> **Batterie wird maximal geladen**<br>=> $P_{bat}(t_2) = -(\Delta P/\Delta t(t_2)_{grid} + \Delta P/\Delta t\|_{lim}^{down}) * \Delta t$<br>=> $\Delta P/\Delta t(t_2)_{grid} = \Delta P/\Delta t\|_{lim}^{down}$ |
| b) | $\Delta P/\Delta t(t_2) < \Delta P/\Delta t\|_{lim}^{down}$ | 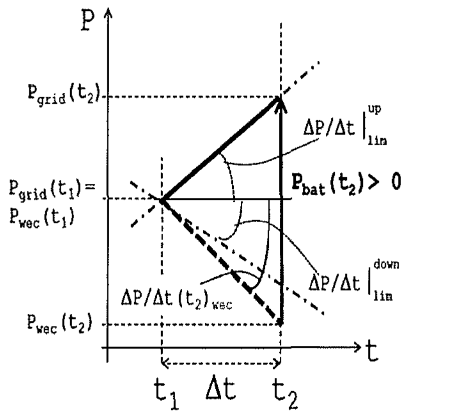<br>=> **Batterie wird maximal entladen**<br>=> $P_{bat}(t_2) = -(\Delta P/\Delta t(t_2)_{grid} - \Delta P/\Delta t\|_{lim}^{up}) * \Delta t$<br>=> $\Delta P/\Delta t(t_2)_{grid} = \Delta P/\Delta t\|_{lim}^{up}$ | 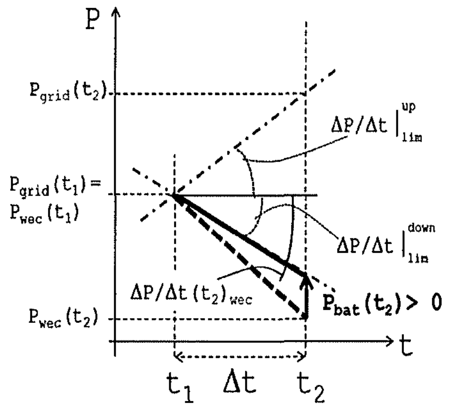<br>=> **Batterie wird minimal entladen**<br>=> $P_{bat}(t_2) = -(\Delta P/\Delta t(t_2)_{grid} + \Delta P/\Delta t\|_{lim}^{down}) * \Delta t$<br>=> $\Delta P/\Delta t(t_2)_{grid} = \Delta P/\Delta t\|_{lim}^{down}$ |
| c) | $\Delta P/\Delta t(t_2) <= \Delta P/\Delta t\|_{lim}^{up}$ und $\Delta P/\Delta t(t_2) >= \Delta P/\Delta t\|_{lim}^{down}$ | 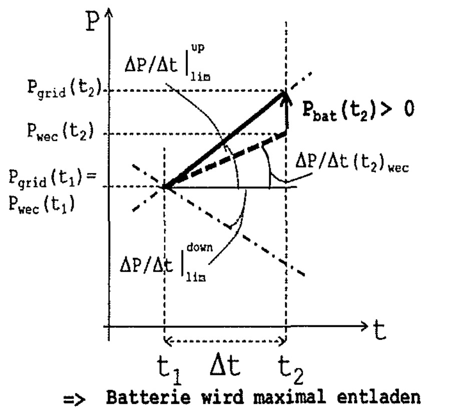<br>=> **Batterie wird maximal entladen**<br>=> $P_{bat}(t_2) = -(\Delta P/\Delta t(t_2)_{grid} - \Delta P/\Delta t\|_{lim}^{up}) * \Delta t$<br>=> $\Delta P/\Delta t(t_2)_{grid} = \Delta P/\Delta t\|_{lim}^{up}$ | 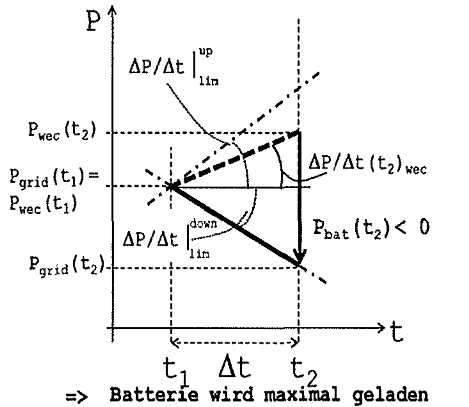<br>=> **Batterie wird maximal geladen**<br>=> $P_{bat}(t_2) = -(\Delta P/\Delta t(t_2)_{grid} + \Delta P/\Delta t\|_{lim}^{down}) * \Delta t$<br>=> $\Delta P/\Delta t(t_2)_{grid} = \Delta P/\Delta t\|_{lim}^{down}$ |

Die in Tabelle 1 gezeigten Fälle lassen sich so zusammenfassen, dass die von der Batterie bereitzustellende Leistung $P_{bat}(t)$ wie folgt berechnet werden kann:

$$[3] \quad P_{bat}(t) = -\left(\frac{\Delta P}{\Delta t}\bigg|_{lim}^{down} + \frac{\Delta P}{\Delta t}\bigg|_{grid}(t)\right) \cdot \Delta t; for\ SoC_{bat}(t) < SoC_{target}$$

$$[4] \quad P_{bat}(t) = \left(\frac{\Delta P}{\Delta t}\bigg|_{lim}^{up} - \frac{\Delta P}{\Delta t}\bigg|_{grid}(t)\right) \cdot \Delta t; for\ SoC_{bat}(t) \geq SoC_{target}$$

Die zeitliche Abweichung des Batterie-Ladezustandes $SoC(t)$ um den Zielwert $SoC_{target}$ hängt davon ab, wie sich die Windleistung ändert, was zu unvorhersehbaren Leistungsänderungen und damit Leistungsgradienten führt. Mit anderen Worten hängt diese zeitliche Abweichung von einer stochastischen Folge von negativen bzw. positiven Leistungsgradienten ab. Diese sollen durch den Batteriebetrieb begrenzt werden. Je öfter negative Gradienten kompensiert werden, desto eher wird der Speicher entleert und umgekehrt.

Den Figuren 4 bis 9 ist zu entnehmen, dass die Ladestation so gesteuert wird, dass ein Gradient der die Einspeiseleistung auf in einen Bereich gebracht wird, der durch den Anstiegsgrenzgradient und den Verringerungsgrenzgradient festgelegt ist. Dabei wird versucht, dass der Gradient entweder zum Anstiegsgrenzgradienten oder zu Verringerungsgrenzgradienten geändert wird. Die Entscheidung dazwischen hängt vom Ladezustand ab. Ist der über seinem Zielwert, wird der Anstiegsgrenzgradient ausgewählt und ansonsten der Verringerungsgrenzgradient.

Es ist weiterhin vorgeschlagen, die Einspeiseleistung $P_{grid}$ an den zeitlich gemittelten Leistungsverlauf des Windparks $\widetilde{P_{wec}}$ zu approximieren. Dies kann erreicht werden, wenn die Batterie mit einer durchschnittlichen Leistung $\widetilde{P_{bat}}(t)$ geladen bzw. entladen wird. Diese Leistung kann der dynamischen Leistung, die die Batterie gemäß den Fig. 4 bis 9 abgibt bzw. aufnimmt, überlagert werden. Sie ist proportional zur Differenz zwischen $\widetilde{P_{wec}}$ und $P_{grid}$ und sie kann wie folgt über die Verwendung einer Gewichtung F eingestellt werden:

$$[5] \quad \widetilde{P_{bat}}(t) = \left(\widetilde{P_{wec}}(t2) - P_{grid}(t1)\right) \cdot F$$

Die Gewichtung F ist somit ein geeigneter zu wählender Proportionalitätsfaktor.

Um sowohl die Einhaltung von Grenzleistungsgradienten mit Hilfe der Batterie zu gewährleisten, besonders wie es im Zusammenhang mit den Fig. 4 bis 9 beschrieben wurde, und zeitglich den Betrieb des Speichermediums bei stabilem Ladezustand sicherzustellen, wird vorgeschlagen, dem Speichermedium eine Sollleistung $P_{bat_gesamt}(t)$ vorzugeben, die sich aus der Überlagerung von $P_{bat}(t)$ und $\widetilde{P_{bat}}$ wie folgt ergibt:

$$[6] \quad P_{bat_gesamt}(t) = P_{bat}(t) + \widetilde{P_{bat}}(t)$$

Zur Verbesserung des Einspeiseverhaltens der Windenergieanlage zusammen mit der Batterie wird auch vorgeschlagen, die Grenzgradienten $\frac{\Delta P}{\Delta t}\Big|_{lim}^{down}$ und $\frac{\Delta P}{\Delta t}\Big|_{lim}^{up}$ der Gleichungen [3] und [4] in Abhängigkeit des Ladezustandes SoC anzupassen. Es wurde erkannt, dass dadurch der Ladezustand, insbesondere der mittlere Ladezustand, beeinflusst werden kann, jedenfalls wenigstens dann, wenn die Ladestation so gesteuert wird, wie zu den Fig. 4 bis 9 beschrieben wurde.

Fig. 10 zeigt beispielhaft für die Konstellation gemäß Fig. 3 zwei zeitliche Leistungsverläufe, nämlich der Leistung $P_{wec}$ der wenigstens einen Windenergieanlage und der gesamten Einspeiseleistung $P_{Grid}$ von Windenergieanlage und Ladestation bzw. Batterie zusammen. Es kommen grundsätzlich zwei Parametrierungen in Betracht. Die erste Parametrierung setzt den oben genannten Gewichtungsfaktor F auf null und es liegen auch zwei gleiche und konstante Werte für den Anstiegsgrenzgradienten und den Verringerungsgrenzgradienten zu Grunde. Diese Konstellation wird unten als "Parametrierung 1" mathematisch definiert.

Bevorzugt wird aber eine als "Parametrierung 2" bezeichnete Parametrierung verwendet, die in den Fig. 10 und 11 vereinfachend als "Wind+Batterie (optimiert)" bezeichnet wird. Bei dieser bevorzugten Ausführungsform wird der Gewichtungsfaktor F nicht auf null gesetzt und es liegen unterschiedliche und variable Werte für den Anstiegsgrenzgradienten und den Verringerungsgrenzgradienten zu Grunde..Die Fig. 10 und 11 zeigen nur für diese zweite Parametrierung Ergebnisse.

Fig. 11 zeigt für die zweite Konstellation der Steuerung der Leistungseinspeisung den Verlauf des Ladezustandes der Batterie. In der Darstellung ist ein Zielladezustand von 50% eingezeichnet und als "SoC target" bezeichnet.

- **Parametrierung 1:**

Wind+Batterie: F=0 (Gleichung [5]) und $\frac{\Delta P}{\Delta t}\Big|_{lim}^{down}, \frac{\Delta P}{\Delta t}\Big|_{lim}^{up}$ = konstant

- **Parametrierung 2:**

Wind+Batterie (optimiert): F≠0 (Gleichung [5]) und $\frac{\Delta P}{\Delta t}\Big|_{lim}^{down}, \frac{\Delta P}{\Delta t}\Big|_{lim}^{up}$ = variabel

F ist somit bei der zweiten Parametrierung zeitlich variabel und abhängig von:

  - dem momentanen Ladezustand SoC,
  - dem Zielladezustand "SoC target und/oder
  - dem zeitlich gemittelten Leistungsverlauf des Windparks $\widetilde{P_{wec}}$.

Der dimensionslose, positive Faktor F variiert zeitlich je nach Anwendung zwischen den Werten 0 und 1 (oder größer). Je grösser die Differenz zwischen aktuellem Ladezustand SoC und dem Zielladezustand SoC_target, desto größer wird, jedenfalls gemäß einer bevorzugten Ausführungsform, der Faktor F gewählt. Der Faktor F wird hierbei abhängig des Ladezustandes verändert bzw, eingestellt. $\frac{\Delta P}{\Delta t}\Big|_{lim}^{down}, \frac{\Delta P}{\Delta t}\Big|_{lim}^{up}$ ist ebenfalls im Falle der Parametrierung 2 zeitlich variabel und abhängig von der Differenz zwischen aktuellem Ladezustand SoC und dem Zielladezustand SoC_target,.

Das Ergebnis der Fig. 10 zeigt, dass durch die vorgeschlagene Steuerung der Ladestation 8, nämlich durch eine Steuerung basierend auf der Parametrierung 2, eine stark verstetigte Einspeiseleistung im Vergleich zur Einspeisung der Windenergieanlage ohne Batterie erreicht werden kann.

Die Fig. 11 zeigt zu dem Verlauf der gesamten Einspeiseleistung $P_{Grid}$ von Windenergieanlage und Ladestation zusammen gemäß Fig. 10 den zugehörigen Verlauf des Ladezustandes SoC. Der Fig. 11 ist zu entnehmen, dass durch die Parametrierung 2, also die bevorzugt vorgeschlagene Steuerung, die Batterie mit vergleichsweise stabilem Ladezustand betrieben werden kann. Fällt der Ladezustand der Batterie in Folge eines kurzzeitigen Einbruchs der Windenergieanlagenleistung ab, was etwa bei≈550s der Fall ist, konvergiert der Ladezustand nach kurzer Zeit wieder gegen seinen Zielwert $SoC_{target}$.

Fig. 12 zeigt im Gegensatz zu Fig. 3 eine zweite Konstellation eines zugrunde liegenden bzw. betrachteten Netzes 201. Im Grunde weist dieses Netz 202 auch die Elemente bzw.

Teilnehmer auf, die in Fig. 3 erläutert wurden, nämlich Verbraucher 202, eine Windenergieanlage 206, was auch repräsentativ für einen Windpark stehen kann, eine Batterie 208, die hier auch repräsentativ für die Ladestation steht und wenigstens einen konventionellen Generator 204.

Für diese Konstellation wird nun vorgeschlagen, die Ladestation 208 bzw. Batterie 208 so zu steuern, dass die von dem Generator 204 in das Netz eingespeiste Leistung $P_{Gen}$ in ihrer zeitlichen Änderung begrenzt wird. Diese von dem Generator in das Netz eingespeiste Leistung $P_{Gen}$ bildet insoweit die Einspeiseleistung, die in ihrer zeitlichen Änderung begrenzt wird. Hier liegt nun die Überlegung zugrunde, dass Schwankungen im Verbraucher 202 als auch Schwankungen in der eingespeisten Leistung $P_{wec}$ der Windenergieanlage 206 ohne Ladestation 208 bzw. Batterie 208 dazu führen würde, dass diese Schwankungen durch die vom Generator eingespeiste Leistung $P_{Gen}$ ausgeglichen werden müsste. Sind diese zeitlichen Änderungen zu stark, muss der konventionelle Generator zu schnell seine Last ändern bzw. bei Generatorbänken würde das bedeuten, dass zu schnell Generatoren zu- oder abgeschaltet werden müssen. Besonders für Motoren, die auf fossilen Brennstoffen basieren, also insbesondere Dieselmotoren, ist das sehr ungünstig für deren Lebensdauer. Die Ladestation bzw. Batterie 208 soll das ausgleichen. Dazu wird die Änderung der Einspeiseleistung $P_{Gen}$ erfasst und die Ladestation bzw. Batterie 208 entsprechend gesteuert.

Sofern die Verbraucher 202 im Wesentlichen ihre Leistung konstant abnehmen, kann diese Konstellation und entsprechende Steuerung der Batterie 208 bzw. Ladestation 208 zu ganz ähnlichen Ergebnissen führen wie bei der Konstellation gemäß Fig. 3. In diesem Fall entstehen nämlich die genannten Leistungsschwankungen nur durch Leistungsschwankungen der Windenergieanlage 206. Die Batterie 208 bzw. Ladestation 208 würde also auch in diesem Fall eine zu starke Leistungsänderung der Windenergieanlage 206 verhindern.

Für den Fall, dass aber die Verbraucher auch schwanken, wird die Batterie 208 die gesamte Leistungsschwankung erfassen und berücksichtigen, die sich durch die Verbraucher 202 und die Windenergieanlage 206 ergeben.

Für weitere Details wird dann nach oben auf die Teile der allgemeinen Beschreibung verwiesen, die Merkmale und Ausführungsformen zu dieser zweiten Konstellation beschreiben.

## Patentansprüche

1. Verfahren zum Betreiben einer elektrischen Ladestation (8) an einem elektrischen Netz (1), das neben elektrischen Verbrauchern (2) wenigstens einen regenerativen Energieerzeuger (6), wenigstens einen durch fossile Brennstoffe betriebenen konventionellen Generator (4), und wenigstens die elektrische Ladestation (8) zum Speichern und wieder Abgeben elektrischer Leistung aufweist,

   umfassend die Schritte

   - Erzeugen elektrischer Leistung durch den wenigstens einen regenerativen Energieerzeuger (6) und Einspeisen der elektrischen Leistung in das Netz (1),
   - Speichern elektrischer Leistung, die von den Verbrauchern (2) nicht verbraucht wird, in der Ladestation (8),
   - Einspeisen elektrischer Leistung durch die Ladestation (8) in das Netz (1), wenn die Verbraucher (2) mehr Leistung verbrauchen, als der wenigstens eine regenerative Erzeuger (6) und der wenigstens eine konventionelle Generator zusammen in das Netz (1) einspeisen,

   wobei

   - in einer ersten Konstellation des Netzes (1) eine in das Netz (1) eingespeiste Einspeiseleistung eine Summe ist aus

     - der Leistung des wenigstens einen regenerativen Energieerzeugers (8) und
     - der Leistung der Ladestation (8) und optional zusätzlich aus

   - der Leistung des wenigstens einen weiteren der Ladestation (8) zugeordneten Generators,

   wobei die Ladestation (8) so gesteuert wird, dass die Einspeiseleistung in ihrer zeitlichen Änderung begrenzt wird,
   und wobei die von der Ladestation (8) abzugebende bzw. aufzunehmende Leistung abhängig von einem Ladezustand um einen Ausgleichswert verändert wird, um den aktuellen Ladezustand einem vorgegebenen Zielladezustand anzunähern, und wobei zum Begrenzen der zeitlichen Änderung der Einspeiseleistung zwei Grenzgradienten vorgegeben werden, nämlich

   - ein Anstiegsgrenzgradient, der bestimmt, mit welcher Änderung pro Zeit sich die Einspeiseleistung maximal erhöhen soll, und
   - ein Verringerungsgrenzgradient, der bestimmt, mit welcher Änderung pro Zeit sich die Einspeiseleistung maximal verringern soll,

   **dadurch gekennzeichnet, dass**
   die Ladestation (8) so gesteuert wird,

   - dass die Änderung der Einspeiseleistung innerhalb einer positiven und negativen Grenze oder innerhalb des Anstiegsgrenzgradienten und des Verringerungsgrenzgradienten geführt wird und dass

   für den Fall der ersten Konstellation

   - die Änderung der Einspeiseleistung positiv ist, wenn die Ladestation (8) einen Ladezustand aufweist, der über einem vorgegebenen Zielladezustand liegt oder
   - die Änderung der Einspeiseleistung negativ ist, wenn die Ladestation (8) einen Ladezustand aufweist, der unter einem vorgegebenen Zielladezustand liegt.

2. Verfahren nach Anspruch 1,
   **dadurch gekennzeichnet, dass**
   der Anstiegsgrenzgradient und der Verringerungsgrenzgradient dem Betrage nach unterschiedlich zueinander sind.

3. Verfahren nach einem der vorstehenden Ansprüche,
   **dadurch gekennzeichnet, dass**
   wenigstens einer der Grenzgradienten

- adaptiv eingestellt wird,
- abhängig von einem mittleren Ladezustand der Ladestation (8) eingestellt wird,
- so eingestellt wird, dass die Ladestation (8) einen vorbestimmten minimalen Ladezustand nicht unterschreitet,
- so eingestellt wird, dass die Ladestation (8) einen vorbestimmten maximalen Ladezustand nicht überschreitet und/oder
- so eingestellt wird, dass ein mittlerer Ladezustand der Ladestation (8) einen vorbestimmten Ladesollwert, SoC_target, annimmt.

**4.** Verfahren nach einem der vorstehenden Ansprüche,
**dadurch gekennzeichnet, dass**
wenigstens einer der Grenzgradienten berechnet wird aus einem vorgegebenen Basisgrenzgradienten, multipliziert mit wenigstens einem Gewichtungsfaktor, wobei insbesondere

- wenigstens einer der Gewichtungsfaktoren von einem Ladezustand, SoC, der Ladestation (8) abhängt,
- wenigstens einer der Gewichtungsfaktoren im Bereich von 0 bis 1 variieren kann,
- wenigstens einer der Gewichtungsfaktoren einen Wert von wenigstens 1 aufweist, insbesondere im Bereich von 1 bis 10 liegt, und/oder
- wenigstens zwei Gewichtungsfaktoren für die Berechnung jeweils eines Grenzgradienten verwendet werden.

**5.** Verfahren nach einem der vorstehenden Ansprüche,
**dadurch gekennzeichnet, dass** für den Fall der ersten Konstellation

- die Ladestation (8) elektrische Leistung abgibt, die zusammen mit elektrischer Leistung des wenigstens einen regenerativen Energieerzeugers in das Netz (1) eingespeist wird, wenn sich die elektrische Leistung des regenerativen Energieerzeugers (6) mit einem Gradienten verringert, der dem Betrage nach größer ist als der vorgegebene Verringerungsgrenzgradient, oder dass
- die Ladestation (8) elektrische Leistung (P) aufnimmt, um die in das Netz (1) eingespeiste elektrische Leistung (P) des wenigstens einen regenerativen Energieerzeugers (6) zu verringern, wenn sich die elektrische Leistung (P) des regenerativen Energieerzeugers (6) mit einem Gradienten erhöht, der dem Betrage nach größer ist als der vorgegebene Anstiegsgrenzgradient.

**6.** Verfahren nach einem der vorstehenden Ansprüche,
**dadurch gekennzeichnet, dass**

zum Steuern der Ladestation (8) eine Zeitdifferenz zwischen einem aktuellen zweiten Zeitpunkt und einem früheren ersten Zeitpunkt berücksichtigt wird,
und dass zu dem früheren ersten Zeitpunkt als früherer Einspeisegradient ein Gradient der Leistung berücksichtigt wird, die zu dem ersten Zeitpunkt von dem wenigstens einen regenerativen Energieerzeuger und der Ladestation und ggf. wenigstens einem weiteren Generator zusammen in das Netz eingespeist wurde.

**7.** Verfahren nach Anspruch 6,

**dadurch gekennzeichnet, dass** für den Fall der ersten Konstellation
die von der Ladestation (8) zu dem zweiten Zeitpunkt abzugebende bzw. aufzunehmende Leistung berechnet wird aus einem Produkt aus

- der Zeitdifferenz und
- einer Differenz zwischen
- dem Betrag des Anstiegsgrenzgradienten und
- dem früheren Einspeisegradienten, wenn

die Ladestation (8) einen Ladezustand, SoC, aufweist, der über einem vorgegebenen Zielladezustand, SoC_target, liegt, oder ansonsten aus einem Produkt aus

- der negativen Zeitdifferenz und
- der Summe
- des Betrags des Verringerungsgrenzgradienten und
- dem früheren Einspeisegradienten, wobei außerdem oder alternativ

zu dem ersten Zeitpunkt ein Messwert eines ersten Messpunktes und zu dem zweiten Zeitpunkt ein Messwert eines zweiten Messpunktes verwendet wird.

8. Verfahren nach einem der vorstehenden Ansprüche,
**dadurch gekennzeichnet, dass**

der wenigstens eine regenerative Erzeuger (6), insbesondere die Windenergieanlage (6)

- kurzzeitig ihre eingespeiste Leistung über die in dem Moment maximal aus dem Wind verfügbare Leistung erhöht,
- kurzzeitig ihre eingespeiste Leistung über die momentan eingespeiste Leistung erhöht,
- kurzzeitig ihre eingespeiste Leistung unter die in dem Moment maximal aus dem Wind verfügbare Leistung verringert, oder
- kurzzeitig ihre eingespeiste Leistung unter die momentan eingespeiste Leistung verringert,

um dadurch durch die Ladestation oder durch den wenigstens einen konventionellen Generator auszugleichende Leistungsspitzen zu verringern, und/oder
dass auch der wenigstens eine regenerative Energieerzeuger, insbesondere eine Windenergieanlage, so gesteuert wird, dass die Einspeiseleistung in ihrer Änderung begrenzt ist.

9. Elektrisches Netz (1), insbesondere Inselnetz (1), dazu vorbereitet mit einem Verfahren gemäß einem der vorstehenden Ansprüche betrieben zu werden,
wobei statt der ersten Konstellation eine zweite Konstellation des Netzes (1) vorgeschlagen wird, bei der die in das Netz (1) eingespeiste Einspeiseleistung die Leistung ist, die von dem wenigstens einen konventionellen Generator (4) erzeugt wird.

10. Elektrisches Netz (1) nach Anspruch 9, **dadurch gekennzeichnet, dass**
das für ein Verfahren gemäß einem der Ansprüche 1 bis 4 vorbereitete elektrische Netz für den Fall der zweiten Konstellation,

- die Ladestation (8) elektrische Leistung an das Netz (1) abgibt, wenn sich die von dem wenigstens einen konventionellen Generator in das Netz (1) eingespeiste elektrische Leistung mit einem Gradienten erhöht, der dem Betrage nach größer ist als der vorgegebene Anstiegsgrenzgradient, oder dass
- die Ladestation (8) elektrische Leistung aus dem Netz aufnimmt, wenn sich die von dem wenigstens einen konventionellen Generator in das Netz (1) eingespeiste elektrische Leistung mit einem Gradienten verringert, der dem Betrage nach größer ist als der vorgegebene Verringerungsgrenzgradient.

11. Ladestation (8), vorbereitet zur Verwendung in einem Netz (1) gemäß Anspruch 9 oder 10.

12. Windenergieanlage (6), vorbereitet zur Verwendung in einem elektrischen Netz (1) nach Anspruch 9 oder 10.

13. Windpark (112) vorbereitet zur Verwendung als regenerativer Energieerzeuger (6) in einem elektrischen Netz (1) nach Anspruch 9 oder 10.

## Claims

1. Method for operating an electrical charging station (8) at an electrical grid (1) comprising, alongside electrical loads (2), at least one regenerative energy generator (6), at least one conventional generator (4) operated by fossil fuels, and at least the electrical charging station (8) for storing and re-emitting electrical power,

comprising the following steps:

- generating electrical power by means of the at least one regenerative energy generator (6) and feeding the electrical power into the grid (1),
- storing electrical power not consumed by the loads (2) in the charging station (8),
- feeding electrical power into the grid (1) by means of the charging station (8) if the loads (2) consume more power than is fed into the grid (1) jointly by the at least one regenerative generator (6) and the at least one conventional generator,

wherein

- in a first configuration of the grid (1), a feed-in power fed into the grid (1) is a sum of

  - the power of the at least one regenerative energy generator (6) and
  - the power of the charging station (8) and optionally in addition
  - the power of the at least one further generator assigned to the charging station (8),

wherein the charging station (8) is controlled in such a way that the feed-in power is limited in terms of its change over time,
and wherein the power to be emitted or taken up by the charging station (8) is altered by a compensation value depending on a state of charge in order to approximate the present state of charge to a predefined target state of charge,
and wherein for limiting the change over time of the feed-in power, two limiting gradients are predefined, namely

- a rise limiting gradient, which determines with what change per time the feed-in power is intended maximally to increase, and
- a decrease limiting gradient, which determines with what change per time the feed-in power is intended maximally to decrease,

**characterized in that**
the charging station (8) is controlled in such a way

- that the change of the feed-in power is guided within a positive and negative limit or within the rise limiting gradient and the decrease limiting gradient and that

for the case of the first configuration

- the change of the feed-in power is positive if the charging station (8) has a state of charge that is above a predefined target state of charge, or
- the change of the feed-in power is negative if the charging station (8) has a state of charge that is below a predefined target state of charge.

**2.** Method according to Claim 1,
**characterized in that**
the rise limiting gradient and the decrease limiting gradient differ from one another in terms of absolute value.

**3.** Method according to any of the preceding claims,
**characterized in that**
at least one of the limiting gradients

- is set adaptively,
- is set depending on a mean state of charge of the charging station (8),
- is set in such a way that the charging station (8) does not fall below a predetermined minimum state of charge,
- is set in such a way that the charging station (8) does not exceed a predetermined maximum state of charge, and/or
- is set in such a way that a mean state of charge of the charging station (8) assumes a predetermined charging setpoint value, SoC_target.

**4.** Method according to any of the preceding claims,
**characterized in that**
at least one of the limiting gradients is calculated from a predefined basis limiting gradient multiplied by at least one weighting factor, wherein in particular

- at least one of the weighting factors is dependent on a state of charge, SoC, of the charging station (8),
- at least one of the weighting factors can vary in the range of 0 to 1,

- at least one of the weighting factors has a value of at least 1, in particular is in the range of 1 to 10, and/or
- at least two weighting factors are used for the calculation of a respective limiting gradient.

**5.** Method according to any of the preceding claims, **characterized in that** for the case of the first configuration

- the charging station (8) emits electrical power which is fed into the grid (1) together with electrical power of the at least one regenerative energy generator if the electrical power of the regenerative energy generator (6) decreases with a gradient which, in terms of absolute value, is greater than the predefined decrease limiting gradient, or that
- the charging station (8) takes up electrical power (P) in order to decrease the electrical power (P) of the at least one regenerative energy generator (6) that is fed into the grid (1) if the electrical power (P) of the regenerative energy generator (6) increases with a gradient which, in terms of absolute value, is greater than the predefined rise limiting gradient.

**6.** Method according to any of the preceding claims, **characterized in that**

a time difference between a present second point in time and an earlier first point in time is taken into account for controlling the charging station (8),
and **in that** at the earlier first point in time, as earlier feed-in gradient, account is taken of a gradient of the power which was fed into the grid at the first point in time jointly by the at least one regenerative energy generator and the charging station and, if appropriate, at least one further generator.

**7.** Method according to Claim 6,

**characterized in that** for the case of the first configuration
the power to be emitted or taken up by the charging station (8) at the second point in time is calculated from a product of

- the time difference and
- a difference between
- the absolute value of the rise limiting gradient and
- the earlier feed-in gradient if

the charging station (8) has a state of charge, SoC, that is above a predefined target state of charge, SoC_target, or otherwise from a product of

- the negative time difference and
- the sum
- of the absolute value of the decrease limiting gradient and
- the earlier feed-in gradient, wherein furthermore or alternatively

a measurement value of a first measurement point is used at the first point in time and a measurement value of a second measurement point is used at the second point in time.

**8.** Method according to any of the preceding claims, **characterized in that**

the at least one regenerative generator (6), in particular the wind energy installation (6),

- momentarily increases its fed-in power above the power maximally available from the wind at the moment,
- momentarily increases its fed-in power above the instantaneously fed-in power,
- momentarily decreases its fed-in power below the power maximally available from the wind at the moment, or
- momentarily decreases its fed-in power below the instantaneously fed-in power,

in order thereby to decrease power spikes to be compensated for by the charging station or by the at least one conventional generator, and/or
that also the at least one regenerative energy generator, in particular a wind energy installation, is controlled in such a way that the feed-in power is limited in its change.

**9.** Electrical grid (1), in particular island grid (1), prepared to be operated by a method according to any of the preceding claims,
wherein instead of the first configuration a second configuration of the network (1) is proposed in which the feed-in power fed into the grid (1) is the power generated by the at least one conventional generator (4).

**10.** Electrical grid (1) according to claim 9, **characterized in that**
the electrical grid prepared for a method according to any of claims 1 to 4 for the case of the second configuration

- the charging station (8) emits electrical power to the grid (1) if the electrical power fed into the grid (1) by the at least one conventional generator increases with a gradient which, in terms of absolute value, is greater than the predefined rise limiting gradient, or that
- the charging station (8) takes up electrical power from the grid if the electrical power fed into the grid (1) by the at least one conventional generator decreases with a gradient which, in terms of absolute value, is greater than the predefined decrease limiting gradient.

**11.** Charging station (8), prepared for use in a grid (1) according to Claim 9 or 10.

**12.** Wind energy installation (6), prepared for use in an electrical grid (1) according to Claim 9 or 10.

**13.** Wind farm (112) prepared for use as a regenerative energy generator (6) in an electrical grid (1) according to Claim 9 or 10.

**Revendications**

**1.** Procédé destiné à faire fonctionner une station de charge électrique (8) sur un réseau électrique (1), qui présente, outre des consommateurs électriques (2), au moins un générateur d'énergie renouvelable (6), au moins un générateur classique (4) alimenté par des combustibles fossiles, et au moins la station de charge électrique (8) pour stocker et délivrer à nouveau une puissance électrique,

comprenant les étapes

- de génération d'une puissance électrique par l'au moins un générateur d'énergie renouvelable (6) et d'injection de la puissance électrique dans le réseau (1),
- de stockage dans la station de charge (8) de la puissance électrique qui n'est pas consommée par les consommateurs (2),
- d'injection d'une puissance électrique par la station de charge (8) dans le réseau (1) lorsque les consommateurs (2) consomment plus de puissance que ce que l'au moins un générateur renouvelable (6) et l'au moins un générateur classique injectent conjointement dans le réseau (1),

dans lequel

- dans une première constellation du réseau (1), une puissance d'injection injectée dans le réseau (1) est une somme

  - de la puissance de l'au moins un générateur d'énergie renouvelable (8) et
  - de la puissance de la station de charge (8), et en option en supplément

- de la puissance de l'au moins un autre générateur associé à la station de charge (8),

dans lequel la station de charge (8) est commandée de telle sorte que la puissance d'injection est limitée dans sa variation dans le temps,
et dans lequel la puissance à délivrer ou à absorber par la station de charge (8) varie d'une valeur de compensation en fonction d'un état de charge pour approcher l'état de charge instantané d'un état de charge ciblé spécifié,
et dans lequel deux gradients de limite sont spécifiés pour limiter la variation dans le temps de la puissance d'injection, à savoir

- un gradient de limite d'augmentation, qui définit la variation par heure avec laquelle la puissance d'injection est censée augmenter au maximum, et
- un gradient de limite de diminution, qui définit la variation par heure avec laquelle la puissance d'injection est censée diminuer au maximum,

**caractérisé en ce que**
la station de charge (8) est commandée de telle sorte

- que la variation de la puissance d'injection est guidée dans une limite positive et négative ou dans le gradient de limite d'augmentation et le gradient de limite de diminution, et que

dans le cas de la première constellation

- la variation de la puissance d'injection est positive lorsque la station de charge (8) présente un état de charge qui est supérieur à un état de charge ciblé spécifié ou
- la variation de la puissance d'injection est négative lorsque la station de charge (8) présente un état de charge qui est inférieur à un état de charge ciblé spécifié.

**2.** Procédé selon la revendication 1,
**caractérisé en ce que**
le gradient de limite d'augmentation et le gradient de limite de diminution sont différents l'un par rapport à l'autre quant à la valeur.

**3.** Procédé selon l'une quelconque des revendications précédentes,
**caractérisé en ce que**
au moins un des gradients de limite

- est réglé de manière adaptative,
- est réglé en fonction d'un état de charge moyen de la station de charge (8),
- est réglé de telle sorte que la station de charge (8) ne dépasse pas un état de charge (SoC) minimal prédéfini,
- est réglé de telle sorte que la station de charge (8) ne dépasse pas un état de charge (SoC) maximal prédéfini et/ou
- est réglé de telle sorte qu'un état de charge (SoC) moyen de la station de charge (8) adopte une valeur théorique de charge (SoC_cible) prédéfinie.

**4.** Procédé selon l'une quelconque des revendications précédentes,
**caractérisé en ce que**
au moins un des gradients de limite est calculé à partir d'un gradient de limite de base spécifié, multiplié par au moins un facteur de pondération, dans lequel en particulier

- au moins un des facteurs de pondération dépend d'un état de charge (SoC) de la station de charge (8),
- au moins un des facteurs de pondération peut varier dans la plage de 0 à 1,
- au moins un des facteurs de pondération présente une valeur d'au moins 1, en particulier se situe dans la plage de 1 à 10, et/ou
- au moins deux facteurs de pondération sont utilisés pour le calcul de respectivement un gradient de limite.

**5.** Procédé selon l'une quelconque des revendications précédentes,
**caractérisé en ce que** dans le cas de la première constellation,

- la station de charge (8) délivre une puissance électrique, qui est injectée dans le réseau (1) conjointement avec une puissance électrique de l'au moins un générateur d'énergie renouvelable lorsque la puissance électrique du générateur d'énergie renouvelable (6) diminue d'un gradient, qui est supérieur, quant à la valeur, au gradient de limite de diminution spécifié, ou que
- la station de charge (8) absorbe une puissance électrique (P) pour diminuer la puissance électrique (P) injectée dans le réseau (1) de l'au moins un générateur d'énergie renouvelable (6) lorsque la puissance électrique (P) du générateur d'énergie renouvelable (6) augmente avec un gradient, qui, quant à la valeur, est supérieur au gradient de limite d'augmentation spécifié.

**6.** Procédé selon l'une quelconque des revendications précédentes,
**caractérisé en ce que**

pour commander la station de charge (8), une différence de temps entre un moment instantané et un premier moment antérieur est prise en compte,
et qu'est pris en compte au premier moment antérieur, en tant que gradient d'injection antérieur, un gradient de la puissance, qui a été injectée dans le réseau au premier moment conjointement par l'au moins un générateur d'énergie renouvelable et la station de charge et éventuellement au moins un autre générateur.

**7.** Procédé selon la revendication 6,

**caractérisé en ce que**, dans le cas de la première constellation,
la puissance à délivrer ou à absorber par la station de charge (8) au deuxième moment est calculée à partir du produit

- de la différence de temps et
- d'une différence entre
- la valeur du gradient de limite d'augmentation et
- le gradient d'injection antérieur lorsque

la station de charge (8) présente un état de charge (SoC), qui est supérieur à un état de charge cible (SoC_cible) spécifié, ou autrement à partir d'un produit

- de la différence de temps négative et
- de la somme
- de la valeur du gradient de limite de diminution et
- du gradient d'injection antérieur, dans lequel par ailleurs ou en variante

une valeur de mesure d'un premier point de mesure est utilisée au premier moment et une valeur de mesure d'un deuxième point de mesure est utilisée au deuxième moment.

**8.** Procédé selon l'une quelconque des revendications précédentes,
**caractérisé en ce que**

l'au moins un générateur renouvelable (6), en particulier l'éolienne (6)

- augmente dans un bref délai sa puissance injectée au-dessus de la puissance disponible au maximum à partir du vent à ce moment,
- augmente dans un bref délai sa puissance injectée au-dessus de la puissance injectée instantanément,
- diminue dans un bref délai sa puissance injectée sous la puissance disponible au maximum à partir du vent à ce moment, ou
- diminue dans un bref délai sa puissance injectée sous la puissance injectée à ce moment

pour réduire ainsi des pointes de puissance à compenser par la station de charge ou par l'au moins un générateur classique, et/ou
que l'au moins un générateur d'énergie renouvelable, en particulier une éolienne, est également commandé de telle sorte que la puissance d'injection est limitée dans sa variation.

**9.** Réseau électrique (1), en particulier réseau séparé (1), préparé pour fonctionner avec un procédé selon l'une quelconque des revendications précédentes,
dans lequel est proposée, en lieu et place de la première constellation, une deuxième constellation du réseau (1), dans laquelle la puissance d'injection injectée dans le réseau (1) est la puissance qui est générée par l'au moins un générateur classique (4).

**10.** Réseau électrique (1) selon la revendication 9, **caractérisé en ce que** le réseau électrique préparé pour un procédé selon l'une quelconque des revendications 1 à 4, dans le cas de la deuxième constellation,

- la station de charge (8) délivre au réseau (1) de la puissance électrique lorsque la puissance électrique injectée dans le réseau (1) par l'au moins un générateur classique augmente avec un gradient, qui, du point de vue de la valeur, est supérieur au gradient de limite d'augmentation spécifié, ou que
- la station de charge (8) absorbe de la puissance électrique provenant du réseau, lorsque la puissance électrique injectée dans le réseau (1) par l'au moins un générateur classique diminue avec un gradient qui, du point de vue de la valeur, est supérieur au gradient de limite de diminution spécifié.

**11.** Station de charge (8) préparée pour être utilisée dans un réseau (1) selon la revendication 9 ou 10.

**12.** Eolienne (6) préparée pour être utilisée dans un réseau électrique (1) selon la revendication 9 ou 10.

**13.** Parc éolien (112) préparé pour être utilisé en tant que générateur d'énergie renouvelable (6) dans un réseau électrique (1) selon la revendication 9 ou 10.

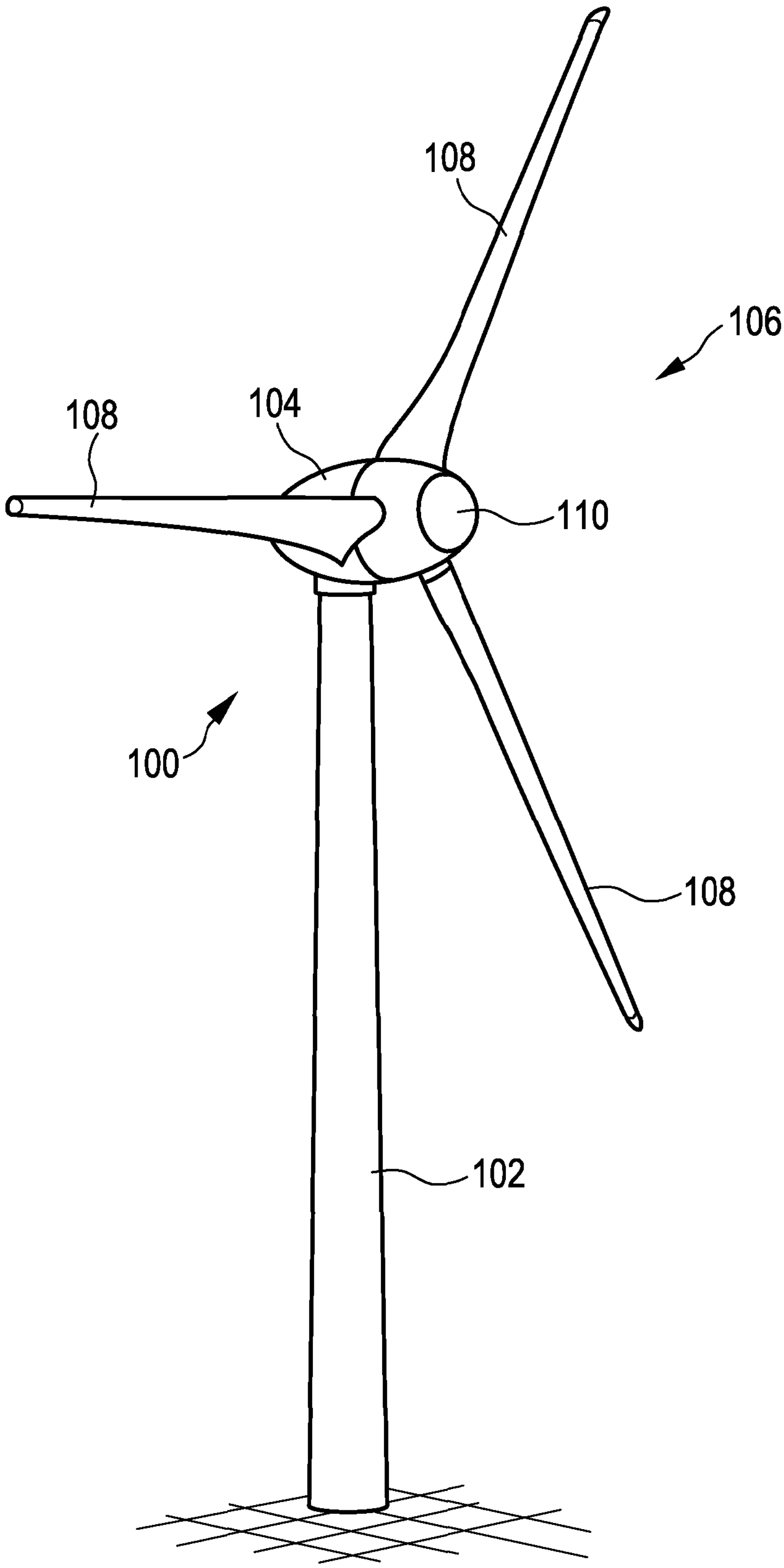


Fig. 1

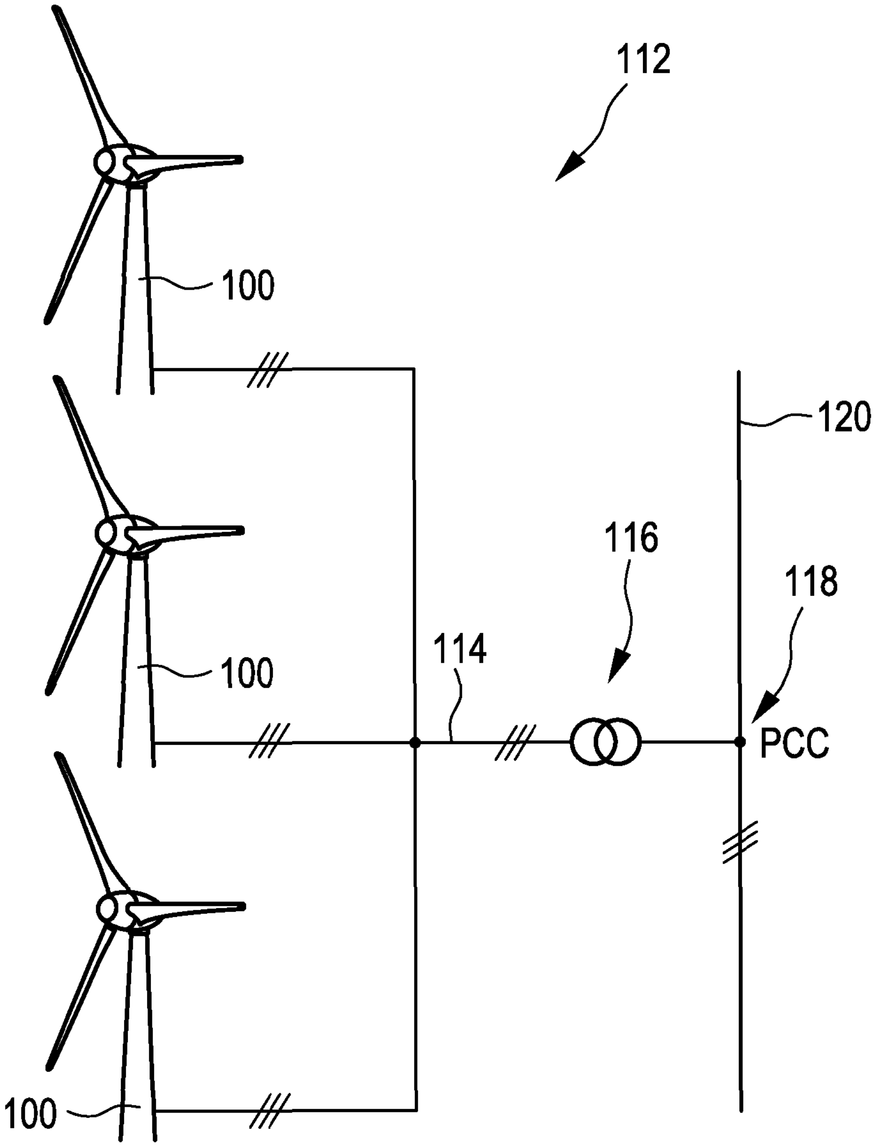


Fig. 2

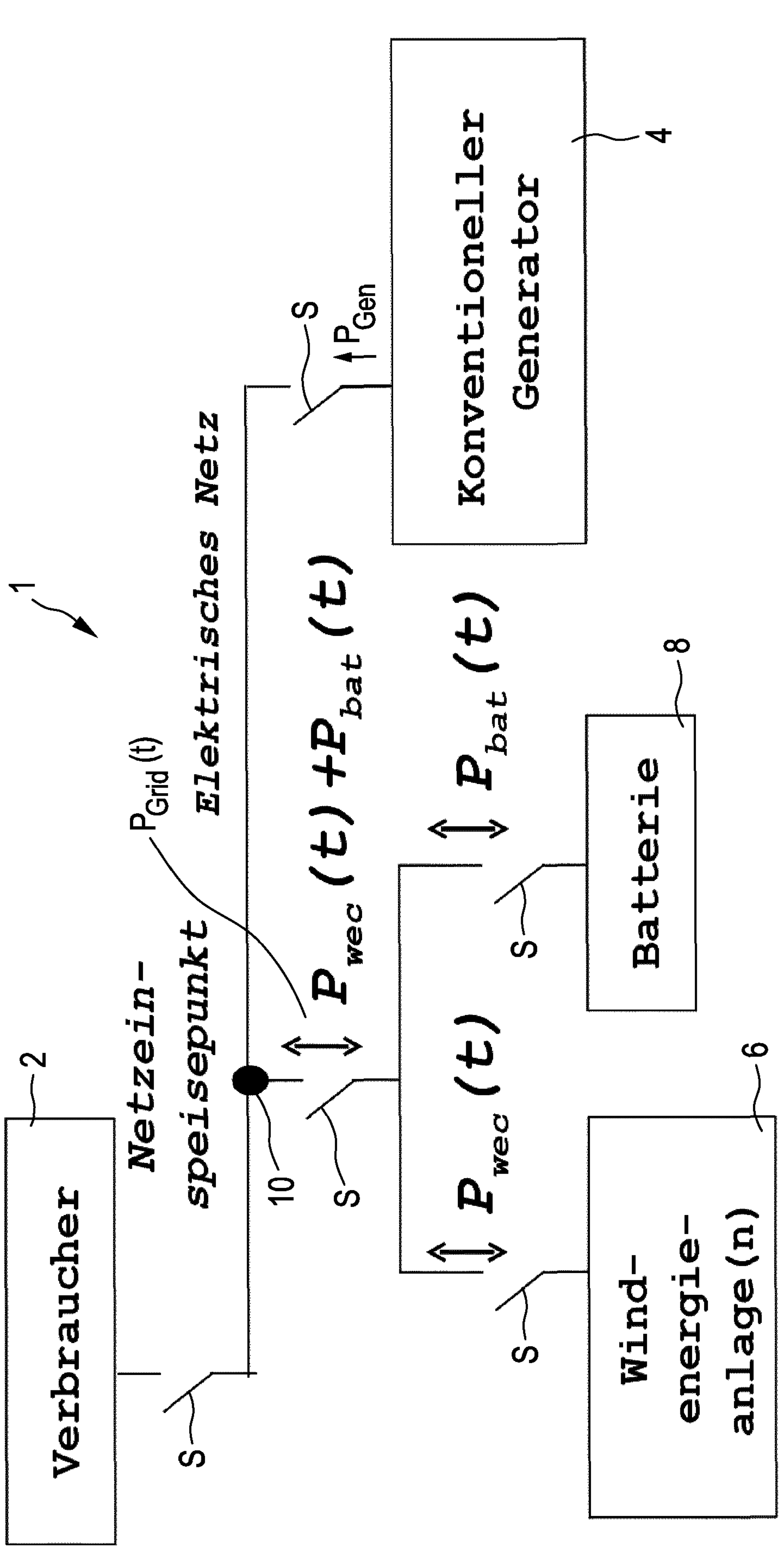
Verbraucher
2
S
Netzein-
speisepunkt
10
1
$P_{Grid}(t)$
Elektrisches Netz
S
$P_{wec}(t)+P_{bat}(t)$
$P_{wec}(t)$
$P_{bat}(t)$
S
S
S
$P_{Gen}$
Konventioneller
Generator
4
Batterie
8
Wind-
energie-
anlage(n)
6

Fig. 3

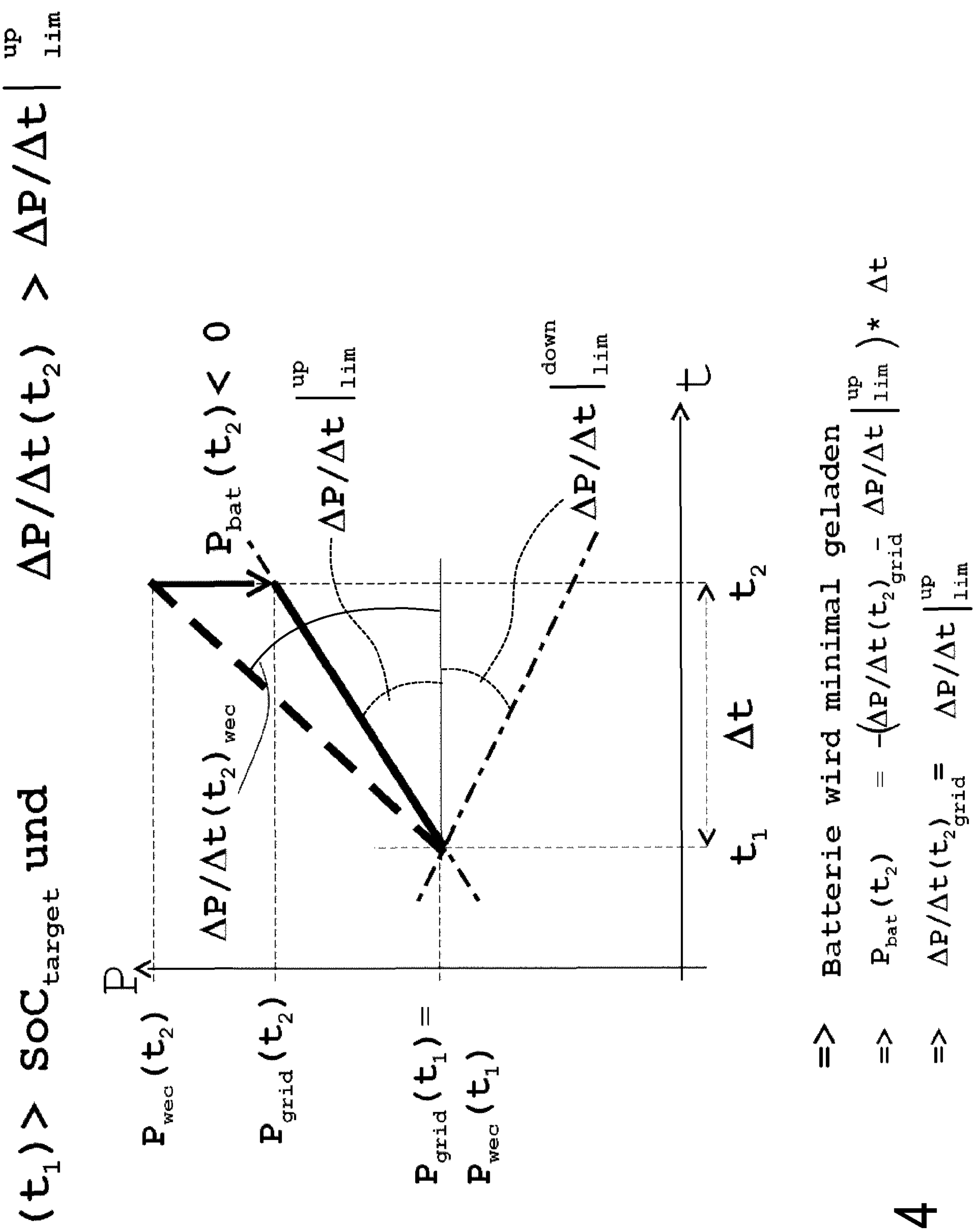
SoC(t1) > SoCtarget und ΔP/Δt(t2) > ΔP/Δt|up lim
Pwec(t2)
Pgrid(t2)
Pgrid(t1) = Pwec(t1)
P
t
ΔP/Δt(t2)wec
Pbat(t2) < 0
ΔP/Δt|up lim
ΔP/Δt|down lim
t1
Δt
t2
=> Batterie wird minimal geladen
=> Pbat(t2) = −(ΔP/Δt(t2)grid − ΔP/Δt|up lim) * Δt
=> ΔP/Δt(t2)grid = ΔP/Δt|up lim

Fig. 4

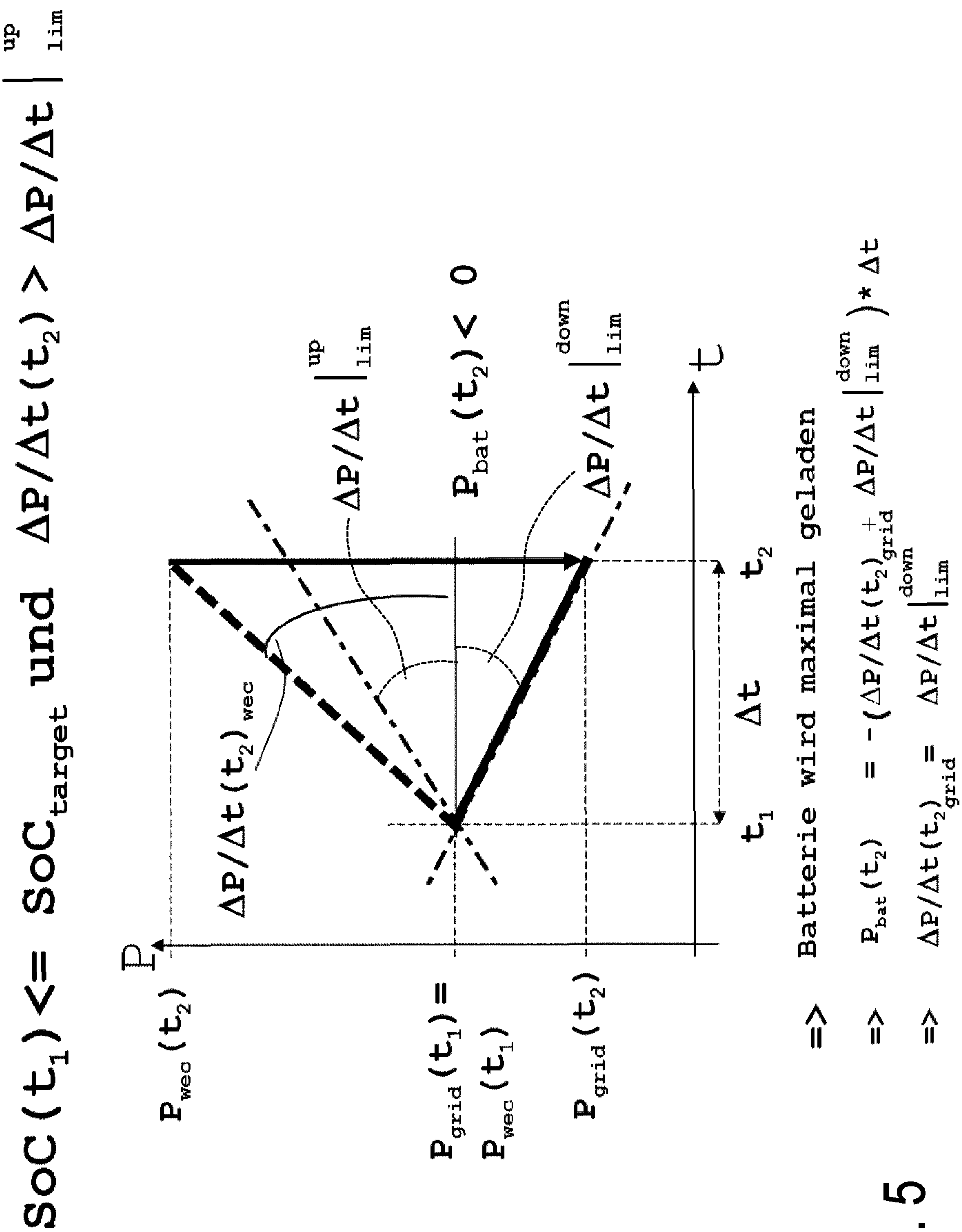
SoC(t1)<= SoCtarget und ΔP/Δt(t2) > ΔP/Δt |up lim
P
Pwec(t2)
Pgrid(t1) = Pwec(t1)
Pgrid(t2)
ΔP/Δt(t2)wec
ΔP/Δt |up lim
Pbat(t2) < 0
ΔP/Δt |down lim
t
t1
Δt
t2
=> Batterie wird maximal geladen
=> Pbat(t2) = -(ΔP/Δt(t2)grid + ΔP/Δt |down lim ) * Δt
=> ΔP/Δt(t2)grid = ΔP/Δt |down lim

Fig. 5

$SoC(t_1) > SoC_{target}$ und $\Delta P/\Delta t(t_2) < \Delta P/\Delta t\big|^{down}_{lim}$

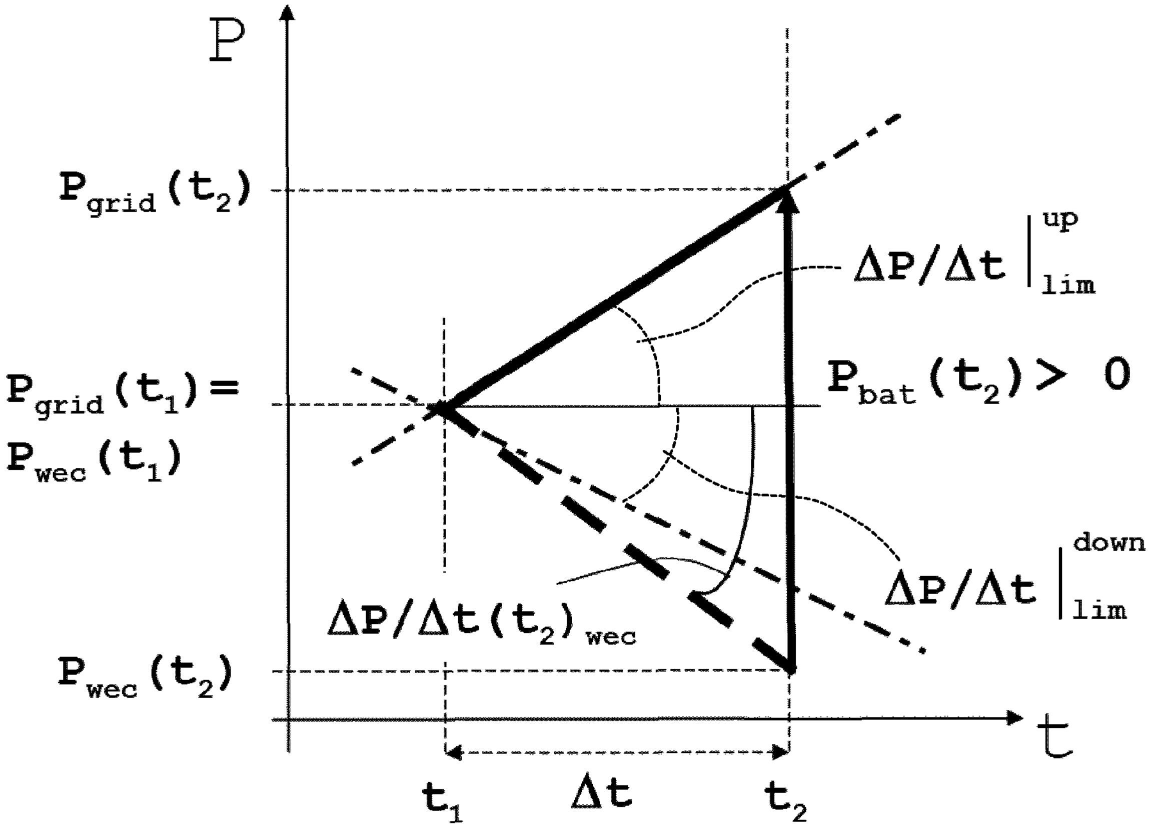


=> Batterie wird maximal entladen

=> $P_{bat}(t_2) = -(\Delta P/\Delta t(t_2)_{grid} - \Delta P/\Delta t\big|^{up}_{lim}) * \Delta t$

=> $\Delta P/\Delta t(t_2)_{grid} = \Delta P/\Delta t\big|^{up}_{lim}$

Fig. 6

$$SoC(t_1) <= SoC_{target} \text{ und } \Delta P/\Delta t(t_2) < \Delta P/\Delta t\Big|_{lim}^{down}$$

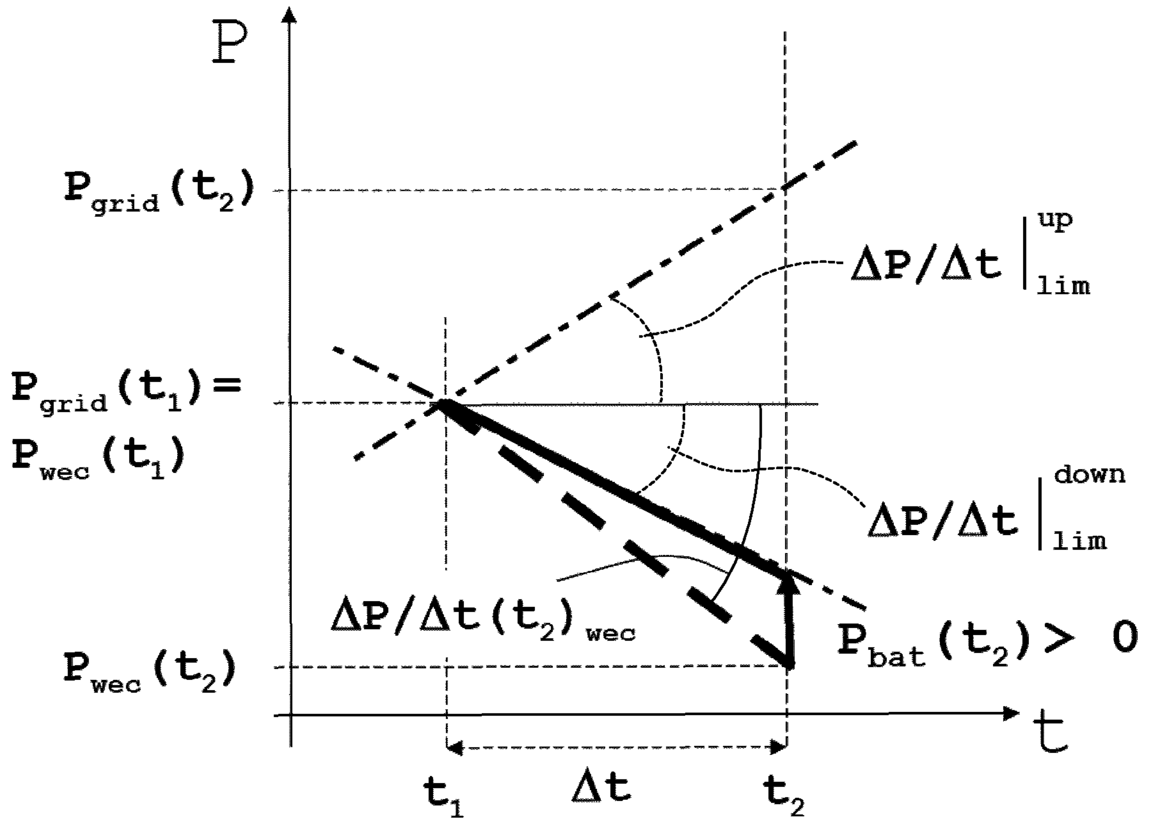


=> Batterie wird minimal entladen

=> $P_{bat}(t_2) = -\left(\Delta P/\Delta t(t_2)_{grid} + \Delta P/\Delta t\big|_{lim}^{down}\right) * \Delta t$

=> $\Delta P/\Delta t(t_2)_{grid} = \Delta P/\Delta t\big|_{lim}^{down}$

Fig. 7

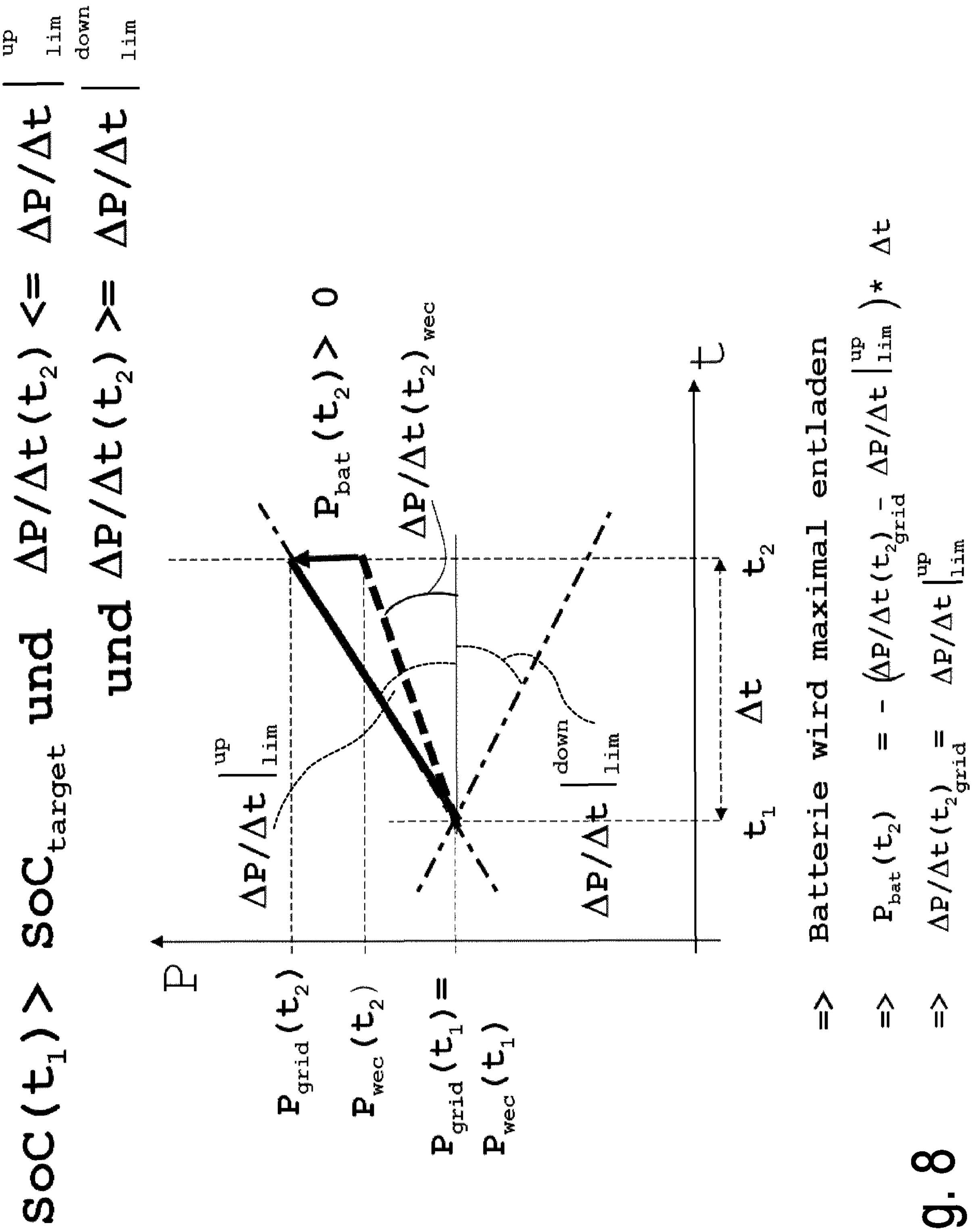

SoC(t1) > SoCtarget und ΔP/Δt(t2) <= ΔP/Δt|up lim
und ΔP/Δt(t2) >= ΔP/Δt|down lim
P
Pgrid(t2)
Pwec(t2)
Pgrid(t1) = Pwec(t1)
ΔP/Δt|up lim
ΔP/Δt|down lim
Pbat(t2) > 0
ΔP/Δt(t2)wec
t
t1
Δt
t2
=> Batterie wird maximal entladen
=> Pbat(t2) = - (ΔP/Δt(t2)grid - ΔP/Δt|up lim) * Δt
=> ΔP/Δt(t2)grid = ΔP/Δt|up lim


Fig. 8

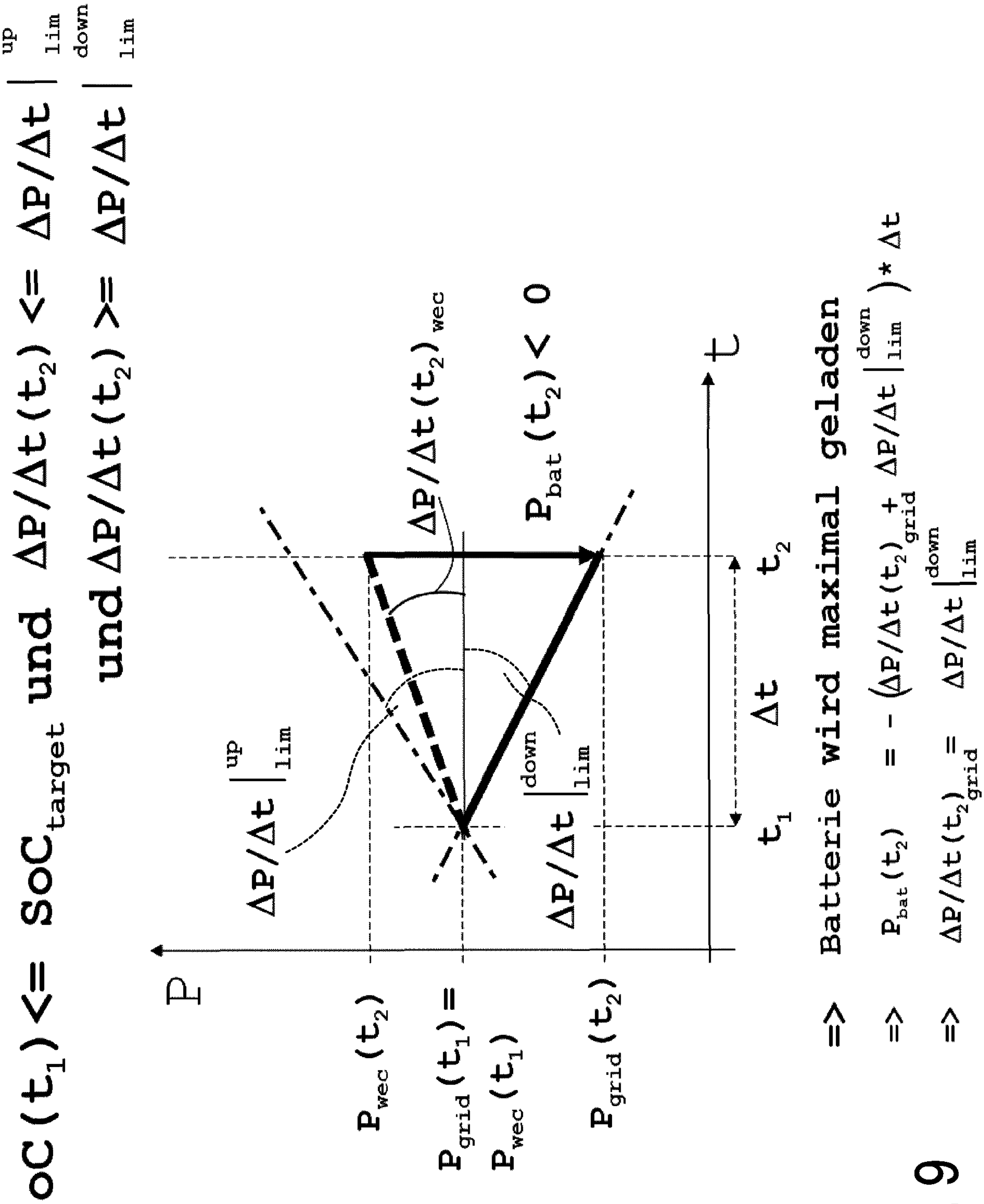
$SoC(t_1) <= SoC_{target}$ und $\Delta P/\Delta t(t_2) <= \Delta P/\Delta t|^{up}_{lim}$
und $\Delta P/\Delta t(t_2) >= \Delta P/\Delta t|^{down}_{lim}$
P
t
$\Delta P/\Delta t|^{up}_{lim}$
$\Delta P/\Delta t|^{down}_{lim}$
$\Delta P/\Delta t(t_2)_{wec}$
$P_{bat}(t_2) < 0$
$t_1$
$\Delta t$
$t_2$
$P_{wec}(t_2)$
$P_{grid}(t_1) = P_{wec}(t_1)$
$P_{grid}(t_2)$
=> Batterie wird maximal geladen
=> $P_{bat}(t_2) = -(\Delta P/\Delta t(t_2)_{grid} + \Delta P/\Delta t|^{down}_{lim}) * \Delta t$
=> $\Delta P/\Delta t(t_2)_{grid} = \Delta P/\Delta t|^{down}_{lim}$

Fig. 9

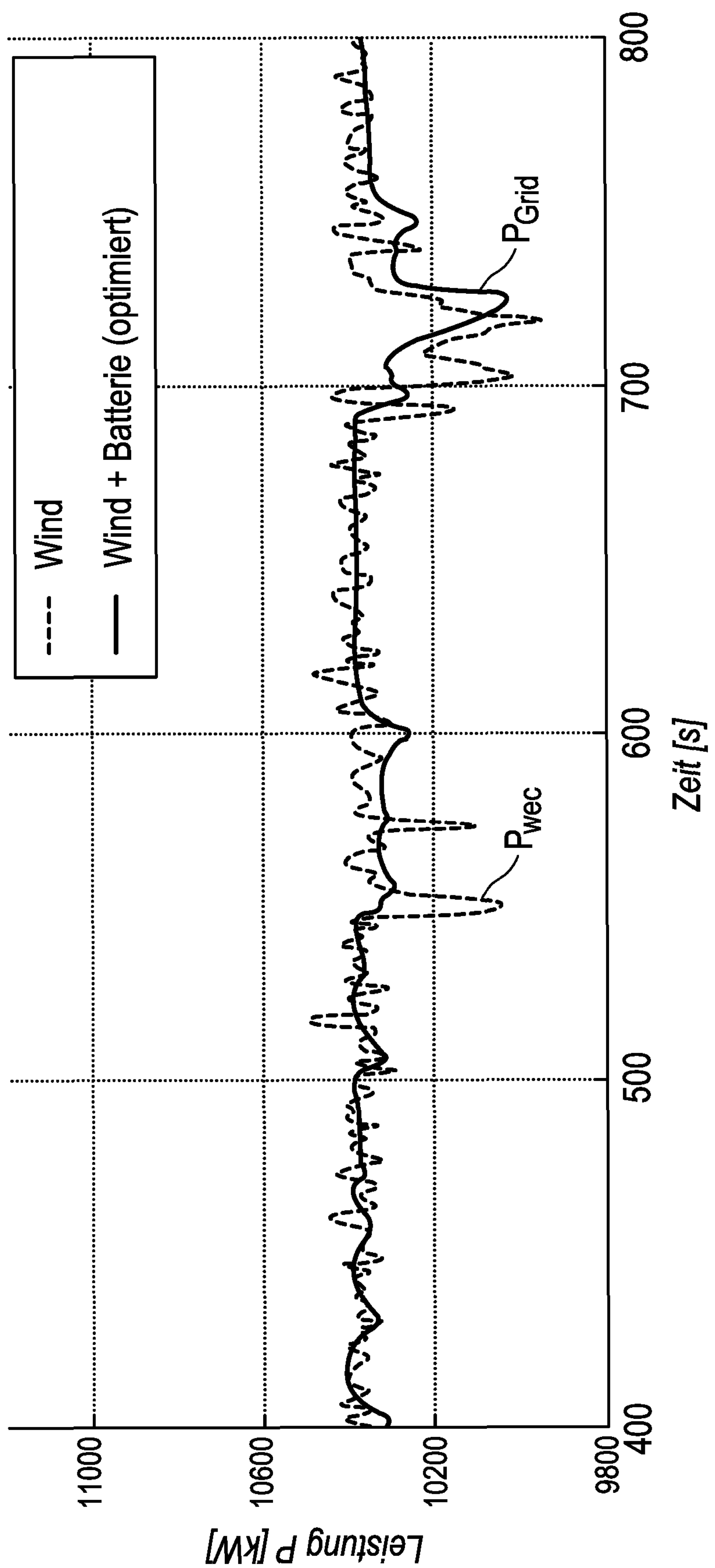

Wind
Wind + Batterie (optimiert)
P_Grid
P_wec
Leistung P [kW]
11000
10600
10200
9800
400
500
600
700
800
Zeit [s]


Fig. 10

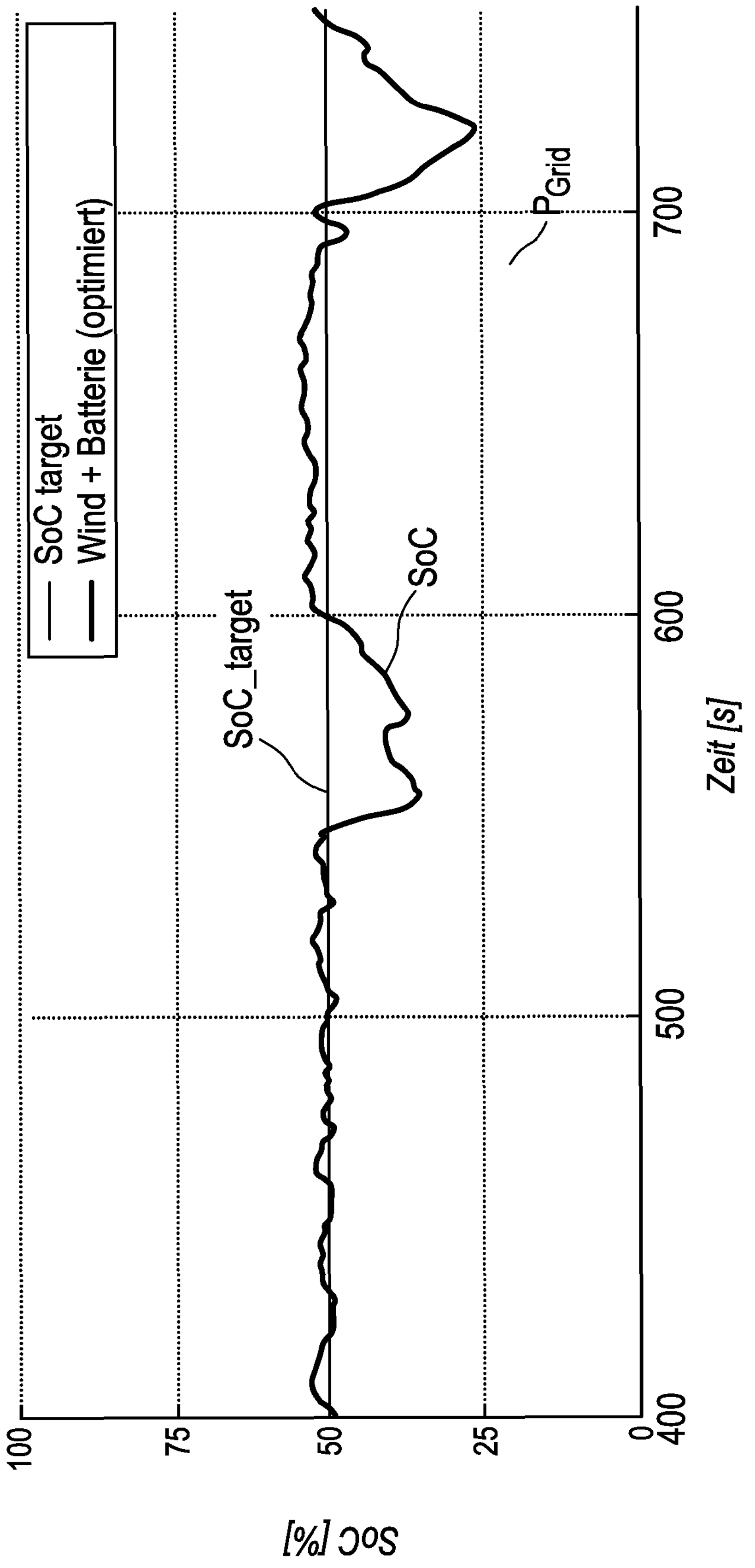
SoC target
Wind + Batterie (optimiert)
SoC_target
SoC
$P_{Grid}$
100
75
50
25
0
400
500
600
700
Zeit [s]
SoC [%]

Fig. 11

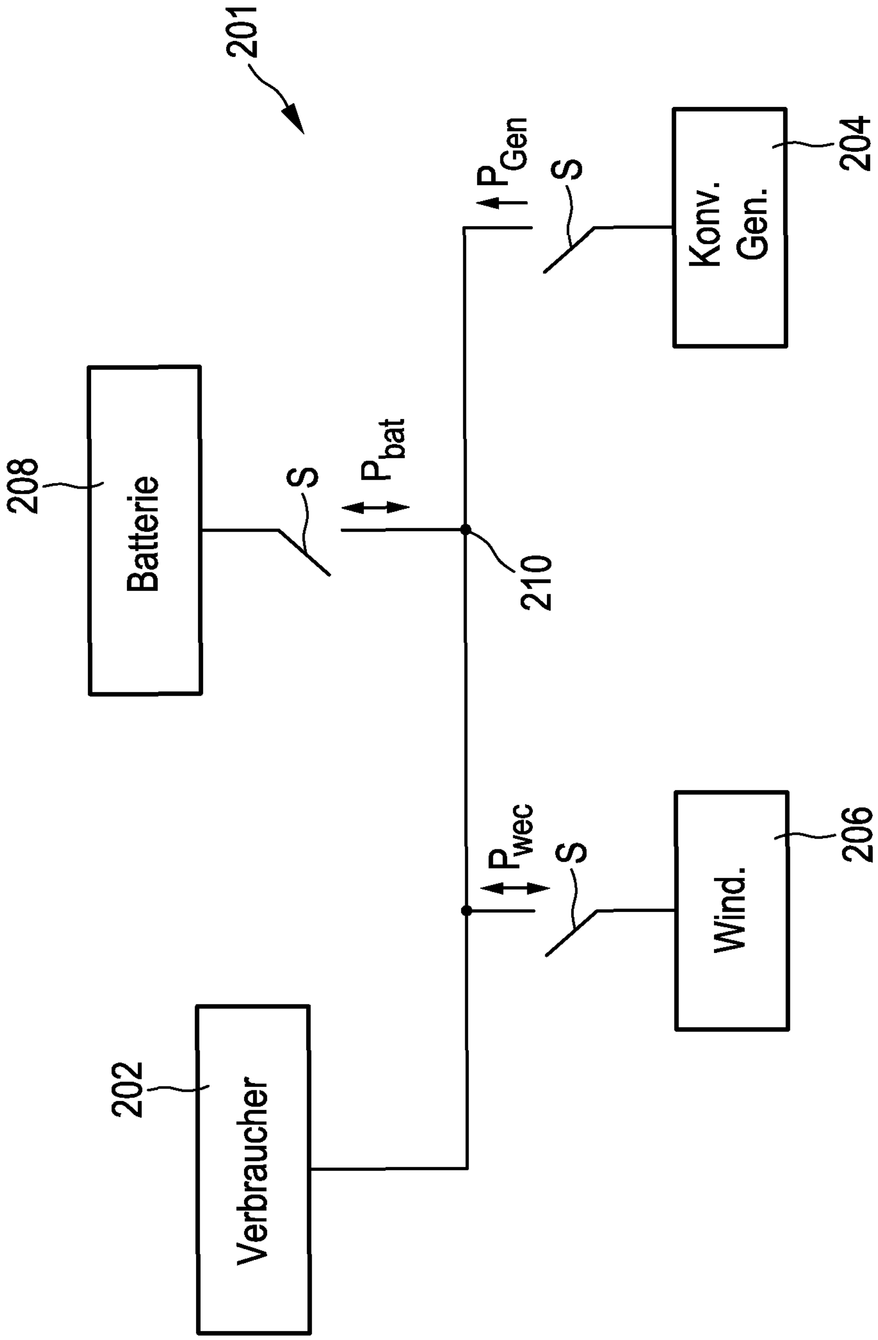
201
208
Batterie
S
$P_{bat}$
210
$P_{Gen}$
S
Konv.
Gen.
204
202
Verbraucher
$P_{wec}$
S
Wind.
206

Fig. 12

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 10380786 B
- US 10506944 B
- US 2011273129 A1
- WO 2014071459 A1
- US 2012323396 A1